(19) Europäisches Patentamt
European Patent Office
Office européen des brevets

(11) **EP 4 542 873 A1**

(12) **EUROPEAN PATENT APPLICATION**
published in accordance with Art. 153(4) EPC

(43) Date of publication:
**23.04.2025   Bulletin 2025/17**

(21) Application number: **23849097.3**

(22) Date of filing: **28.06.2023**

(51) International Patent Classification (IPC):
*H04B 7/0413* (2017.01)

(52) Cooperative Patent Classification (CPC):
**H04B 7/0408; H04B 7/0413; H04W 72/044;
H04W 72/0446**

(86) International application number:
**PCT/CN2023/103327**

(87) International publication number:
**WO 2024/027387 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.08.2022   CN 202210918209**

(71) Applicant: **Huawei Technologies Co., Ltd.
Shenzhen, Guangdong 518129 (CN)**

(72) Inventors:
• **GAO, Xinyu
Shenzhen, Guangdong 518129 (CN)**
• **HOU, Yuefeng
Shenzhen, Guangdong 518129 (CN)**
• **LIU, Kunpeng
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **INFORMATION TRANSMISSION METHOD AND APPARATUS**

(57)    This application provides an information transmission method and an apparatus. The method includes: A first network device sends first information to a second network device, where the first information is used by the second network device to determine, at K first time resource locations, K first beam sets, the first beam set includes at least one first beam, the first information includes information about the K first time resource locations and information about the K first beam sets, the K first time resource locations are in one-to-one correspondence with the K first beam sets, and K is an integer greater than or equal to 1. According to the technical solution provided in this application, the second network device may determine, based on the first information, a beam set used for beam measurement. In comparison with a wide and narrow beam sweeping solution in a conventional technology, signaling overheads of the second network device in a beam management process can be reduced.

Method 400

FIG. 4

**Description**

This application claims priority to Chinese Patent Application No. 202210918209.0, filed with the China National Intellectual Property Administration on August 1, 2022 and entitled "INFORMATION TRANSMISSION METHOD AND APPARATUS", which is incorporated herein by reference in its entirety.

**TECHNICAL FIELD**

This application relates to the field of communication technologies, and more specifically, to an information transmission method and an apparatus.

**BACKGROUND**

As a revolutionary technology, an intelligent reflecting surface (intelligent reflecting surface, IRS) intelligently reconstructs a wireless transmission environment through a plane including a large quantity of low-cost passive reflection units, so that performance of a wireless communication system can be significantly improved, and data transmission between a base station and a terminal device over a non-direct path can be changed to data transmission over a direct path. Specifically, the IRS controls an amplitude and a phase of an incident signal to reflect the incident signal, to collaboratively implement fine-grained three-dimensional beamforming, and enhancement and cancellation of a directional signal. Therefore, the IRS technology is considered as one of key technologies of a next-generation mobile communication network, and is widely used to receive and parse control signaling of the base station. The IRS technology has advantages of low power consumption and low costs, and may be considered as an efficient technical solution for enhancing network coverage and increasing a network capacity.

However, reflection gains of the IRS all come from a large-sized antenna array. A beam reflected by the IRS is usually narrow, and there are a large quantity of beams within coverage. Consequently, there is a high delay in an actual beam management process of the IRS, and it is difficult to align a terminal device that really needs to be served. Currently, a technical solution used in this field is to introduce a wide and narrow beam layered sweeping solution at a high frequency. To be specific, wide beam sweeping is first performed to select an optimal wide beam from a plurality of wide beams, and narrow beam sweeping is further performed within coverage of the wide beam, until a beam that meets a requirement is found. In an IRS system, because one time of complete wide and narrow beam sweeping needs to be performed on each terminal device within coverage, and each IRS usually needs to serve a plurality of terminal devices, signaling overheads of the IRS in the beam management process multiply as a quantity of terminal devices increases.

In view of this, how to reduce the signaling overheads of the IRS in the beam management process has become an urgent technical problem that needs to be resolved in the art.

**SUMMARY**

Embodiments of this application provide an information transmission method and an apparatus, including a first network device, a second network device, and a terminal device. The first network device may indicate, by using information, to generate a measurement beam set on the second network device, and use potential sparseness of a reflection channel between the first network device, the second network device, and the terminal device in space domain. In comparison with a wide and narrow beam sweeping solution in a conventional technology, overheads in a beam management process can be significantly reduced.

According to a first aspect, an information transmission method is provided, including: A first network device sends first information to a second network device, where the first information is used by the second network device to determine, at K first time resource locations, K first beam sets, the first beam set includes at least one first beam, the first information includes information about the K first time resource locations and information about the K first beam sets, the K first time resource locations are in one-to-one correspondence with the K first beam sets, and K is an integer greater than or equal to 1.

It should be understood that in this application, there may be one or more first network devices, second network devices, and terminal devices. In an example, this is not limited in this application.

It should be further understood that, in a possible implementation, the second network device may be an intelligent reflecting surface.

According to the technical solution, the second network device may determine the K first beam sets at the K first time resource locations based on the first information sent by the first network device, and then perform beam sweeping based on the K first beam sets. In comparison with a wide and narrow beam sweeping solution in a conventional technology, signaling overheads of the second network device in a beam management process can be reduced.

With reference to the first aspect, in some implementations of the first aspect, the information about the K first beam sets includes K first matrices, the first matrix includes M × N elements, M represents a quantity of radiating elements of the second network device in a vertical dimension, N represents a quantity of radiating elements of the second network device in a horizontal dimension, and M and N are integers greater than or equal to 1; and an $a^{th}$ element in the M × N elements is a weight of an $a^{th}$ radiating element in M×N radiating elements, weights of K×(M × N) radiating elements are used to generate the K first beam sets, and a is an integer greater than or equal to 1.

According to the technical solution, the first network device may send the K first matrices to the second network device, to control a beam set on the second network device, so as to implement beam sweeping on a terminal device in a specific area. In addition, in comparison with the wide and narrow beam sweeping solution in the conventional technology, the signaling overheads of the second network device in the beam management process can be reduced.

Specifically, in this embodiment of this application, the first matrix may be determined based on one or more of the following: values of the M × N elements of the first matrix; a first cyclic shift, where the first cyclic shift is a cyclic shift of the first matrix relative to a base matrix, the base matrix includes M × N elements, M represents the quantity of radiating elements of the second network device in the vertical dimension, N represents the quantity of radiating elements of the second network device in the horizontal dimension, and M and N are integers greater than or equal to 1; and an index corresponding to a first codeword in a first codebook, where the first codebook is a matrix set of the first matrix, the first codebook includes a plurality of first codewords, each codeword corresponds to one index, and the first codeword indicates the first matrix.

With reference to the first aspect, in some implementations of the first aspect, the information transmission method further includes: The first network device sends second information to the second network device, where the second information includes the base matrix.

According to the technical solution, the first network device may send the base matrix to the second network device, the second network device determines a first matrix based on the base matrix and the first cyclic shift, and the second network device generates a corresponding beam set based on the first matrix.

In a possible implementation, the base matrix may be preconfigured in the second network device, or may be configured by another network device or a terminal device for the second network device. This is not limited in this embodiment of this application.

Specifically, in this embodiment of this application, the base matrix is determined based on one or both of the following: values of the M × N elements of the base matrix; and an index corresponding to a second codeword in a second codebook, where the second codebook is a matrix set of the base matrix, the second codebook includes a plurality of second codewords, each codeword corresponds to one index, and the second codeword indicates the base matrix.

With reference to the first aspect, in some implementations of the first aspect, the information transmission method further includes: The first network device receives, at the K first time resource locations, K uplink reference signals sent by the terminal device, where the K uplink reference signals are signals forwarded by the second network device to the first network device by using the K first beam sets, and the K uplink reference signals are in one-to-one correspondence with the K first beam sets. The first network device determines third information based on the K uplink reference signals, where the third information indicates a second beam set, and the second beam set is used by the second network device to forward, to the first network device, uplink data sent by the terminal device, or the second beam set is used by the second network device to forward, to the terminal device, downlink data sent by the first network device.

It should be understood that in this application, the uplink reference signal may be an SRS. In an example, this is not limited in this application.

Specifically, in a possible implementation, the third information includes information about whether the terminal device is served by the second network device, identification information of an optimal second network device serving the terminal device, and identification information of an optimal beam corresponding to the optimal second network device serving the terminal device.

According to the technical solution, the first network device may determine, at the K time resource locations, the third information based on the K uplink reference signals sent by the terminal device, to determine a target beam with optimal channel quality. In comparison with the wide and narrow beam sweeping solution in the conventional technology, the overheads in the beam management process can be significantly reduced.

With reference to the first aspect, in some implementations of the first aspect, the information transmission method further includes: The first network device sends, at the K time resource locations, K downlink reference signals to the terminal device, where the K downlink reference signals are signals forwarded by the second network device to the terminal device by using the K first beam sets, the K downlink reference signals are in one-to-one correspondence with the K first beam sets, and the K downlink reference signals are used by the terminal device to determine third information. The first network device receives the third information, where the third information indicates a second beam set, and the second beam set is used by the second network device to forward, to the first network device, uplink data sent by the terminal device, or the second beam set is used by the second network device to forward, to the terminal device, downlink data sent by the first network device.

It should be understood that in this application, the downlink reference signal may be a CSI-RS. In an example, this is not limited in this application.

Specifically, in a possible implementation, the third information includes information about whether the terminal device is served by the second network device, identification information of an optimal second network device serving the terminal device, and identification information of an optimal beam corresponding to the optimal second network device serving the terminal device.

According to the technical solution, the terminal device may determine the third information based on the K downlink reference signals sent by the first network device at the K time resource locations, and report the third information to the first network device, so as to determine a target beam with optimal channel quality. In comparison with the wide and narrow beam sweeping solution in the conventional technology, the overheads in the beam management process can be significantly reduced.

In a possible implementation, the information is carried in radio resource control signaling or media access control control element signaling.

According to a second aspect, an information transmission method is provided, including: A second network device receives first information sent by a first network device, where the first information is used by the second network device to determine, at K first time resource locations, K first beam sets, the first beam set includes at least one first beam, the first information includes information about the K first time resource locations and information about the K first beam sets, the K first time resource locations are in one-to-one correspondence with the K first beam sets, and K is an integer greater than or equal to 1. The second network device determines, at the K first time resource locations, the K first beam sets based on the first information.

According to the technical solution, the second network device may determine the K first beam sets at the K first time resource locations based on the first information sent by the first network device, and then perform beam sweeping based on the K first beam sets. In comparison with a wide and narrow beam sweeping solution in a conventional technology, signaling overheads of the second network device in a beam management process can be reduced.

With reference to the second aspect, in some implementations of the second aspect, the information about the K first beam sets includes K first matrices, the first matrix includes $M \times N$ elements, M represents a quantity of radiating elements of the second network device in a vertical dimension, N represents a quantity of radiating elements of the second network device in a horizontal dimension, and M and N are integers greater than or equal to 1; and an $a^{th}$ element in the $M \times N$ elements is a weight of an $a^{th}$ radiating element in $M \times N$ radiating elements, weights of $K \times (M \times N)$ radiating elements are used to generate the K first beam sets, and a is an integer greater than or equal to 1.

According to the technical solution, the second network device may receive the K first matrices sent by the first network device, to determine K beam sets on the second network device, so as to implement beam sweeping on a terminal device in a specific area. In addition, in comparison with the wide and narrow beam sweeping solution in the conventional technology, the signaling overheads of the second network device in the beam management process can be reduced.

Specifically, in this embodiment of this application, the first matrix may be determined based on one or more of the following: values of the $M \times N$ elements of the first matrix; a first cyclic shift, where the first cyclic shift is a cyclic shift of the first matrix relative to a base matrix, the base matrix includes $M \times N$ elements, M represents the quantity of radiating elements of the second network device in the vertical dimension, N represents the quantity of radiating elements of the second network device in the horizontal dimension, and M and N are integers greater than or equal to 1; and an index corresponding to a first codeword in a first codebook, where the first codebook is a matrix set of the first matrix, the first codebook includes a plurality of first codewords, each codeword corresponds to one index, and the first codeword indicates the first matrix.

With reference to the second aspect, in some implementations of the second aspect, the information transmission method further includes: The second network device receives second information sent by the first network device, where the second information includes the base matrix.

According to the technical solution, the second network device may receive a base matrix sent by the first network device, the second network device determines a first matrix based on the base matrix and the first cyclic shift, and the second network device generates a corresponding beam set based on the first matrix.

In a possible implementation, the base matrix may be preconfigured in the second network device, or may be configured by another network device or a terminal device for the second network device. This is not limited in this embodiment of this application.

Specifically, in this embodiment of this application, the base matrix is determined based on one or both of the following: values of the $M \times N$ elements of the base matrix; and an index corresponding to a second codeword in a second codebook, where the second codebook is a matrix set of the base matrix, the second codebook includes a plurality of second codewords, each codeword corresponds to one index, and the second codeword indicates the base matrix.

With reference to the second aspect, in some implementations of the second aspect, the information transmission method further includes: The second network device forwards K uplink reference signals to the first network device by using the K first beam sets, where the K uplink reference signals are signals sent by a terminal device to the first network device at the K first time resource locations, the K uplink reference signals are in one-to-one correspondence with the K first beam sets, and the K uplink reference signals are used by the first network device to determine third information, where the third information indicates a second beam set, and the second beam set is used by the second network device to forward, to the first network device, uplink data sent by the terminal device, or the second beam set is used by the second network device to forward, to the terminal device, downlink data sent by the first network device.

It should be understood that in this application, the uplink reference signal may be an SRS. In an example, this is not limited in this application.

Specifically, in a possible implementation, the third information includes information about whether the terminal device is served by the second network device, identification information of an optimal second network device serving the terminal device, and identification information of an optimal beam corresponding to the optimal second network device serving the terminal device.

According to the technical solution, the first network device may determine, at the K time resource locations, the third information based on the K uplink reference signals sent by the terminal device, to determine a target beam with optimal channel quality. In comparison with the wide and narrow beam sweeping solution in the conventional technology, the overheads in the beam management process can be significantly reduced.

With reference to the second aspect, in some implementations of the second aspect, the information transmission method further includes: The second network device forwards K downlink reference signals to a terminal device by using the K first beam sets, where the K downlink reference signals are signals sent by the first network device to the terminal device at the K time resource locations, the K downlink reference signals are in one-to-one correspondence with the K first beam sets, and the K downlink reference signals are used by the terminal device to determine third information, where the third information indicates a second beam set, and the second beam set is used by the second network device to forward, to the first network device, uplink data sent by the terminal device, or the second beam set is used by the second network device to forward, to the terminal device, downlink data sent by the first network device.

It should be understood that in this application, the downlink reference signal may be a CSI-RS. In an example, this is not limited in this application.

Specifically, in a possible implementation, the third information includes information about whether the terminal device is served by the second network device, identification information of an optimal second network device serving the terminal device, and identification information of an optimal beam corresponding to the optimal second network device serving the terminal device.

According to the technical solution, the terminal device may determine the third information based on the K downlink reference signals sent by the first network device at the K time resource locations, and report the third information to the first network device, so as to determine a target beam with optimal channel quality. In comparison with the wide and narrow beam sweeping solution in the conventional technology, the overheads in the beam management process can be significantly reduced.

In a possible implementation, the information is carried in radio resource control signaling or media access control control element signaling.

According to a third aspect, an information transmission method is provided, including: A terminal device sends, at K first time resource locations, K uplink reference signals to a first network device, where the K uplink reference signals indicate a second beam set, and the second beam set is used by a second network device to forward, to the first network device, uplink data sent by the terminal device, or the second beam set is used by a second network device to forward, to the terminal device, downlink data sent by the first network device.

With reference to the third aspect, in some implementations of the third aspect, the information transmission method further includes: The terminal device receives K downlink reference signals sent by the first network device at the K first time resource locations. The terminal device determines third information based on the K downlink reference signals, where the third information indicates a second beam set, and the second beam set is used by the second network device to forward, to the first network device, uplink data sent by the terminal device, or the second beam set is used by the second network device to forward, to the terminal device, downlink data sent by the first network device.

According to a fourth aspect, a communication apparatus is provided. The apparatus includes a transceiver unit and a processing unit. The transceiver unit is configured to send first information to a second network device, where the first information is used by the second network device to determine, at K first time resource locations, K first beam sets, the first beam set includes at least one first beam, the first information includes information about the K first time resource locations and information about the K first beam sets, the K first time resource locations are in one-to-one correspondence with the K first beam sets, and K is an integer greater than or equal to 1.

With reference to the fourth aspect, in some implementations of the fourth aspect, the information about the K first beam sets includes K first matrices, the first matrix includes $M \times N$ elements, M represents a quantity of radiating elements of the second network device in a vertical dimension, N represents a quantity of radiating elements of the second network device in a horizontal dimension, and M and N are integers greater than or equal to 1; and an $a^{th}$ element in the $M \times N$ elements is a weight of an $a^{th}$ radiating element in $M \times N$ radiating elements, weights of $K \times (M \times N)$ radiating elements are used to generate the K first beam sets, and a is an integer greater than or equal to 1.

Specifically, in this embodiment of this application, the first matrix may be determined based on one or more of the following: values of the M × N elements of the first matrix; a first cyclic shift, where the first cyclic shift is a cyclic shift of the first matrix relative to a base matrix, the base matrix includes M × N elements, M represents the quantity of radiating elements of the second network device in the vertical dimension, N represents the quantity of radiating elements of the second network device in the horizontal dimension, and M and N are integers greater than or equal to 1; and an index corresponding to a first codeword in a first codebook, where the first codebook is a matrix set of the first matrix, the first codebook includes a plurality of first codewords, each codeword corresponds to one index, and the first codeword indicates the first matrix.

With reference to the fourth aspect, in some implementations of the fourth aspect, the transceiver unit is further configured to send second information to the second network device, where the second information includes the base matrix.

Specifically, in this embodiment of this application, the base matrix is determined based on one or both of the following: values of the M × N elements of the base matrix; and an index corresponding to a second codeword in a second codebook, where the second codebook is a matrix set of the base matrix, the second codebook includes a plurality of second codewords, each codeword corresponds to one index, and the second codeword indicates the base matrix.

With reference to the fourth aspect, in some implementations of the fourth aspect, the transceiver unit is further configured to receive, by the first network device at the K first time resource locations, K uplink reference signals sent by the terminal device, where the K uplink reference signals are signals forwarded by the second network device to the first network device by using the K first beam sets, and the K uplink reference signals are in one-to-one correspondence with the K first beam sets. The processing unit is configured to determine, by the first network device, third information based on the K uplink reference signals, where the third information indicates a second beam set, and the second beam set is used by the second network device to forward, to the first network device, uplink data sent by the terminal device, or the second beam set is used by the second network device to forward, to the terminal device, downlink data sent by the first network device.

It should be understood that in this application, the uplink reference signal may be an SRS. In an example, this is not limited in this application.

Specifically, in a possible implementation, the third information includes information about whether the terminal device is served by the second network device, identification information of an optimal second network device serving the terminal device, and identification information of an optimal beam corresponding to the optimal second network device serving the terminal device.

With reference to the fourth aspect, in some implementations of the fourth aspect, the transceiver unit is further configured to send, by the first network device at the K time resource locations, K downlink reference signals to the terminal device, where the K downlink reference signals are signals forwarded by the second network device to the terminal device by using the K first beam sets, the K downlink reference signals are in one-to-one correspondence with the K first beam sets, and the K downlink reference signals are used by the terminal device to determine third information. The transceiver unit is further configured to receive, by first network device, the third information, where the third information indicates a second beam set, and the second beam set is used by the second network device to forward, to the first network device, uplink data sent by the terminal device, or the second beam set is used by the second network device to forward, to the terminal device, downlink data sent by the first network device.

It should be understood that in this application, the downlink reference signal may be a CSI-RS. In an example, this is not limited in this application.

Specifically, in a possible implementation, the third information includes information about whether the terminal device is served by the second network device, identification information of an optimal second network device serving the terminal device, and identification information of an optimal beam corresponding to the optimal second network device serving the terminal device.

In a possible implementation, the information is carried in radio resource control signaling or media access control control element signaling.

According to a fifth aspect, a communication apparatus is provided. The apparatus includes a transceiver unit and a processing unit. The transceiver unit is configured to receive first information sent by a first network device, where the first information is used by the second network device to determine, at K first time resource locations, K first beam sets, the first beam set includes at least one first beam, the first information includes information about the K first time resource locations and information about the K first beam sets, the K first time resource locations are in one-to-one correspondence with the K first beam sets, and K is an integer greater than or equal to 1. The processing unit is configured to determine, at the K first time resource locations, the K first beam sets based on the first information.

With reference to the fifth aspect, in some implementations of the fifth aspect, the information about the K first beam sets includes K first matrices, the first matrix includes M × N elements, M represents a quantity of radiating elements of the second network device in a vertical dimension, N represents a quantity of radiating elements of the second network device in a horizontal dimension, and M and N are integers greater than or equal to 1; and an $a^{th}$ element in the M × N elements is a weight of an $a^{th}$ radiating element in M radiating elements, weights of $K \times (M \times N)$ radiating elements are used to generate the K first beam sets, and a is an integer greater than or equal to 1.

Specifically, in this embodiment of this application, the first matrix may be determined based on one or more of the following: values of the $M \times N$ elements of the first matrix; a first cyclic shift, where the first cyclic shift is a cyclic shift of the first matrix relative to a base matrix, the base matrix includes $M \times N$ elements, M represents the quantity of radiating elements of the second network device in the vertical dimension, N represents the quantity of radiating elements of the second network device in the horizontal dimension, and M and N are integers greater than or equal to 1; and an index corresponding to a first codeword in a first codebook, where the first codebook is a matrix set of the first matrix, the first codebook includes a plurality of first codewords, each codeword corresponds to one index, and the first codeword indicates the first matrix.

With reference to the fifth aspect, in some implementations of the fifth aspect, the transceiver unit is further configured to receive second information sent by the first network device, where the second information includes the base matrix.

Specifically, in this embodiment of this application, the base matrix is determined based on one or both of the following: values of the $M \times N$ elements of the base matrix; and an index corresponding to a second codeword in a second codebook, where the second codebook is a matrix set of the base matrix, the second codebook includes a plurality of second codewords, each codeword corresponds to one index, and the second codeword indicates the base matrix.

With reference to the fifth aspect, in some implementations of the fifth aspect, the transceiver unit is further configured to forward, by the second network device, K uplink reference signals to the first network device by using the K first beam sets, where the K uplink reference signals are signals sent by a terminal device to the first network device at the K first time resource locations, the K uplink reference signals are in one-to-one correspondence with the K first beam sets, and the K uplink reference signals are used by the first network device to determine third information, where the third information indicates a second beam set, and the second beam set is used by the second network device to forward, to the first network device, uplink data sent by the terminal device, or the second beam set is used by the second network device to forward, to the terminal device, downlink data sent by the first network device.

With reference to the fifth aspect, in some implementations of the fifth aspect, the transceiver unit is further configured to forward, by the second network device, K downlink reference signals to a terminal device by using the K first beam sets, where the K downlink reference signals are signals sent by the first network device to the terminal device at the K time resource locations, the K downlink reference signals are in one-to-one correspondence with the K first beam sets, and the K downlink reference signals are used by the terminal device to determine third information, where the third information indicates a second beam set, and the second beam set is used by the second network device to forward, to the first network device, uplink data sent by the terminal device, or the second beam set is used by the second network device to forward, to the terminal device, downlink data sent by the first network device.

In a possible implementation, the information is carried in radio resource control signaling or media access control control element signaling.

According to a sixth aspect, a communication apparatus is provided. The apparatus includes a transceiver unit and a processing unit. The transceiver unit is configured to send, at K first time resource locations, K uplink reference signals to a first network device, where the K uplink reference signals indicate the first network device to determine third information, the third information indicates a second beam set, and the second beam set is used by a second network device to forward, to the first network device, uplink data sent by a terminal device, or the second beam set is used by a second network device to forward, to a terminal device, downlink data sent by the first network device.

With reference to the sixth aspect, in some implementations of the sixth aspect, the transceiver unit is further configured to receive K downlink reference signals sent by the first network device at the K first time resource locations. The processing unit is configured to determine third information based on the K downlink reference signals, where the third information indicates a second beam set, and the second beam set is used by the second network device to forward, to the first network device, uplink data sent by the terminal device, or the second beam set is used by the second network device to forward, to the terminal device, downlink data sent by the first network device.

Specifically, in a possible implementation, the third information includes information about whether the terminal device is served by the second network device, identification information of an optimal second network device serving the terminal device, and identification information of an optimal beam corresponding to the optimal second network device serving the terminal device.

According to a seventh aspect, a communication apparatus is provided, including a processor. The processor is coupled to a memory, and may be configured to execute instructions or data in the memory to implement the method according to any one of the first aspect and the possible implementations of the first aspect. The communication apparatus further includes the memory. The communication apparatus further includes a communication interface, and the processor is coupled to the communication interface.

In an implementation, the communication apparatus is a first network device. When the communication apparatus is a first network device, the communication interface may be a transceiver or an input/output interface.

In another implementation, the communication apparatus is a chip or a chip system disposed in a first network device. When the communication apparatus is a chip or a chip system disposed in a first network device, the communication interface may be an input/output interface.

The transceiver may be a transceiver circuit. The input/output interface may be an input/output circuit.

According to an eighth aspect, a communication apparatus is provided, including a processor. The processor is coupled to a memory and may be configured to execute instructions or data in the memory to implement the method according to any one of the second aspect and the possible implementations of the second aspect. The communication apparatus further includes the memory. The communication apparatus further includes a communication interface, and the processor is coupled to the communication interface.

In an implementation, the communication apparatus is a second network device. When the communication apparatus is a second network device, the communication interface may be a transceiver or an input/output interface.

In another implementation, the communication apparatus is a chip or a chip system disposed in a second network device. When the communication apparatus is a chip or a chip system disposed in a second network device, the communication interface may be an input/output interface.

The transceiver may be a transceiver circuit. The input/output interface may be an input/output circuit.

According to a ninth aspect, a communication apparatus is provided, including a processor. The processor is coupled to a memory and may be configured to execute instructions or data in the memory to implement the method according to any one of the third aspect and the possible implementations of the third aspect. The communication apparatus further includes the memory. The communication apparatus further includes a communication interface, and the processor is coupled to the communication interface.

In an implementation, the communication apparatus is a terminal device. When the communication apparatus is a terminal device, the communication interface may be a transceiver or an input/output interface.

In another implementation, the communication apparatus is a chip or a chip system disposed in a terminal device. When the communication apparatus is a chip or a chip system disposed in a terminal device, the communication interface may be an input/output interface.

The transceiver may be a transceiver circuit. The input/output interface may be an input/output circuit.

According to a tenth aspect, a processor is provided, including an input circuit, an output circuit, and a processing circuit. The processing circuit is configured to: receive a signal through the input circuit, and transmit the signal through the output circuit, to enable the processor to perform the method according to any one of the first aspect to the third aspect and the possible implementations of the first aspect to the third aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eleventh aspect, a processing apparatus is provided, including a processor and a memory. The processor is configured to read instructions stored in the memory, and may receive a signal through a receiver, and transmit a signal through a transmitter, to perform the method in any one of the first aspect to the third aspect and the possible implementations of the first aspect to the third aspect.

There are one or more processors, and there are one or more memories.

The memory may be integrated with the processor, or the memory may be disposed separately from the processor.

In a specific implementation process, the memory may be a non-transitory (non-transitory) memory, for example, a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

The processing apparatus according to the eleventh aspect may be one or more chips, or may be a chip system. The processor in the processing apparatus may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor and exist independently.

According to a twelfth aspect, a computer program product is provided. The computer program product includes a computer program (which may also be referred to as code or instructions). When the computer program is run, a computer is enabled to perform the method according to any one of the first aspect to the third aspect and the possible implementations of the first aspect to the third aspect.

According to a thirteenth aspect, a computer-readable storage medium is provided. The computer-readable storage medium stores a computer program (which may also be referred to as code or instructions). When the computer program is run on a computer, the computer is enabled to perform the method according to any one of the first aspect to the third aspect and the possible implementations of the first aspect to the third aspect.

According to a fourteenth aspect, a communication system is provided, including the foregoing first network device, the foregoing second network device, and/or the foregoing terminal device.

## BRIEF DESCRIPTION OF DRAWINGS

FIG. 1 is a diagram of a wireless communication system according to an embodiment of this application;
FIG. 2 is a diagram of another wireless communication system according to an embodiment of this application;
FIG. 3 is a diagram of an architecture of an IRS according to an embodiment of this application;
FIG. 4 is a schematic flowchart of an information transmission method according to an embodiment of this application;
FIG. 5 is a diagram of a cyclic shift of a base matrix according to this application;
FIG. 6 is a schematic flowchart of another information transmission method according to an embodiment of this application;
FIG. 7 is a block diagram of a communication apparatus according to an embodiment of this application;
FIG. 8 is a diagram of a structure of a terminal device according to an embodiment of this application;
FIG. 9 is a diagram of a structure of a network device according to an embodiment of this application; and
FIG. 10 is a diagram of a structure of an IRS according to an embodiment of this application.

## DESCRIPTION OF EMBODIMENTS

Technical solutions provided in this application are described in detail below with reference to the accompanying drawings.

The technical solutions in embodiments of this application may be applied to various communication systems, for example, a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) mobile communication system, or a new radio access technology (new radio access technology, NR). The 5G mobile communication system may include non-standalone (non-standalone, NSA) networking and/or standalone (standalone, SA). The technical solutions provided in this application may be further applied to a future communication system, for example, a 6th generation mobile communication system. This is not limited in embodiments of this application.

A network device in embodiments of this application may be any device with a wireless transceiver function. The device includes but is not limited to an evolved NodeB (evolved NodeB, eNB or eNodeB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), and an access point (access point, AP), a wireless relay node, a wireless backhaul node, a transmission point (transmission point, TP), a transmission reception point (transmission reception point, TRP), or the like in a wireless fidelity (wireless fidelity, Wi-Fi) system. Alternatively, the device may be a gNB or a transmission point (TRP or TP) in a 5G system like an NR system, may be one antenna panel or a group of antenna panels (including a plurality of antenna panels) of a base station in a 5G system, or may be a network node, like a baseband unit (BBU) or a distributed unit (distributed unit, DU), that constitutes a gNB or a transmission point.

In some deployments, the gNB in embodiments of this application may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified as a network device in a radio access network (radio access network, RAN), or the CU may be classified as a network device in a core network (core network, CN). This is not limited in embodiments of this application.

In embodiments of this application, a terminal device may be referred to as a user equipment (user equipment, UE), a terminal (terminal), a mobile station (mobile station, MS), a mobile terminal (mobile terminal), or the like. The terminal device may further communicate with one or more core networks through a radio access network (radio access network, RAN). The terminal device may also be referred to as an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a vehicle having a communication function, a wearable device, a terminal device in a future 5G network, or the like. This is not limited in embodiments of this application.

For ease of understanding, the following first explains technical terms in the technical solutions of this application.

1. Intelligent reflecting surface IRS

The intelligent reflecting surface IRS is a large-scale antenna array including a large quantity of reconfigurable passive elements. Each element can independently cause a phase shift of an incident signal, to collaboratively change propagation of a reflected signal. Compared with an amplify-and-forward (amplify-and-forward, AF) relay that assists source-destination transmission by amplifying and regenerating signals, the IRS does not use a transmitter module, and only reflects received signals by using a passive array, and therefore consumes no transmit power. In addition, the IRS is mainly configured to improve performance of an existing communication link, instead of transferring information of the IRS through reflection. A direct path signal in backscatter communication is an interference signal, and generally needs to be suppressed or eliminated on a receiver. However, in an IRS enhanced communication process, both the direct path signal and a reflection path signal carry same useful information, and therefore, coherent superposition may be performed on the receiver, to maximize a total received power.

As a passive full-duplex device, the IRS not only has extremely low energy consumption, but also has extremely high spectrum efficiency in a full-duplex mode. In addition, there is no self-interference, and no information interference does not occur during reflection. Because the IRS does not need to perform information in a receiving or transmitting process, transmission efficiency is improved. Compared with another active intelligent surface, the IRS has advantages such as low costs, low power consumption, and flexible mounting, and the IRS is of great significance for application of future emergency communication, military communication, and the like.

Compared with a conventional communication manner, using the IRS for communication has the following advantages. Compared with a conventional relay, the IRS does not use a transmitter module, and only reflects a received signal by using a passive array, and therefore causes no additional power consumption. In addition, an active relay usually runs in a half-duplex mode, and therefore, spectrum efficiency of the active relay is lower than that of the IRS running in the full-duplex mode. Although in some implementations, the active relay may also run in the full-duplex mode, the active relay may cause severe self-interference. In this case, a complex interference cancellation technology may be used for processing. Different from conventional backscatter communication during which a signal sent by a reader is reflected to perform communication between the reader and the receiver, the IRS is configured to enhance performance of the existing communication link without transferring any information of the IRS through reflection. Therefore, no additional interference is introduced when communication is performed through the IRS. During IRS enhanced communication, both the direct path signal and the reflection path signal carry same useful information. In this case, coherent superposition may be performed on the receiver, to maximize the total received power.

Currently, research on an IRS-assisted wireless communication system in the field of wireless communication technologies is in a preliminary stage. A core of the IRS-assisted wireless communication system is to cover a surface, a building, an uncrewed aerial vehicle, and the like by using an IRS having a reconfigurable reflection characteristic, and adjust a reflected beam to maximize a received signal gain, so as to reduce interference.

2. Beam management

Beam management is to manage sweeping, reporting, and maintenance of static beams. By performing beam management, cell coverage can be improved, and system overheads can be reduced. An objective of beam management is to select an appropriate static beam for each channel.

In a 5G system, beam management means that a base station and a terminal device capture and maintain a group of base station and/or terminal device beams by using an L1/L2 process, where the group of base station and/or terminal device beams is used for uplink and downlink transmission.

Regardless of whether the terminal device is in an initial access phase in an idle mode or a data transmission phase in a connected mode, the terminal device needs to perform a beam management operation. For example, in the idle state, the terminal device measures a sweeping beam of the base station, to implement initial access; and in the connected state, the terminal device may measure a transmit beam of the terminal device, to implement fine beam adjustment. In addition, the terminal device may also measure transmit beams of a same base station, to change a transmit beam of the terminal device when the terminal device uses beamforming. Reference signals used for beam measurement in the idle state and the connected state are different.

Specifically, beam management may include beam sweeping, beam measurement, beam identification, beam reporting, beam failure recovery, and the like.

Beam sweeping means that a beam is sent and/or received in a preset manner in a specific periodicity or time period, to cover a specific space area.

A beam sweeping technology is used, so that transmission is performed on a beam in a predefined direction in a fixed periodicity. For example, during initial access, the terminal device needs to synchronize with a system and receive minimum system information. Therefore, a plurality of SSB blocks carrying a PSS, an SSS, and a PBCH are scanned and sent in a fixed periodicity. A CSI-RS may also use the beam sweeping technology. However, if all predefined beam directions need to be covered, overheads of the CSI-RS are excessively high. In this case, the CSI-RS is communicated only in a specific subset of the predefined beam directions based on a location of a mobile terminal served by the CSI-RS.

Beam measurement is a process in which the base station or the terminal device measures quality and a characteristic of a received beamformed signal. In a beam management process, the terminal device or the base station identifies an optimal beam through related measurement.

Beam reporting means that the terminal device reports a measurement result of a beam to the base station.

Beam indication means that the base station notifies the terminal device to select a specific beam.

Beam failure recovery includes a process of beam failure detection, new beam discovery, and beam recovery.

3. Channel state information report (CSI report): It may also be referred to as CSI for short. In a wireless communication system, it is information reported by a receive end (for example, a terminal device) to a transmit end (for example, a network device) and used to describe a channel attribute of a communication link. The CSI report may include, for example, but is not limited to, a precoding matrix indicator (precoding matrix indicator, PMI), a rank indication (rank indication, RI), a channel quality indicator (channel quality indicator, CQI), a channel state information reference signal (channel state information reference signal, CSI-RS) resource indicator (CSI-RS resource indicator, CRI), and a layer indicator (layer indicator, LI). It should be understood that the foregoing listed specific content of the CSI is merely an example for description, and shall not constitute any limitation on this application. The CSI may include one or more of the foregoing listed content, or may include other information that is different from the foregoing listed content and that is used to represent the CSI. This is not limited in this application.

An example in which the terminal device reports the CSI to the network device is used. The terminal device may report one or more CSI reports in one time unit (for example, slot (slot)), and each CSI report may correspond to one CSI reporting configuration condition. For example, the CSI reporting configuration condition may be determined, for example, by using higher layer signaling (for example, an information element (information element, IE) CSI reporting configuration (CSI-ReportingConfig) in a radio resource control (resource control, RRC) message). The CSI reporting configuration may be used to indicate a time domain behavior of CSI reporting, a bandwidth, a format corresponding to a report quantity (report quantity), and the like. The time domain behavior includes, for example, periodic (periodic), semi-persistent (semi-persistent), and aperiodic (aperiodic) time domain reporting behaviors. The terminal device may generate one CSI report based on one CSI reporting setting.

In this embodiment of this application, when generating the CSI report, the terminal device may divide content in the CSI report into two parts. For example, the CSI report may include a first part and a second part. The first part may also be referred to as a part 1 (part 1). The second part may also be referred to as a part 2 (part 2). The first part and the second part may be independently encoded. A payload (payload) size (size) of the first part may be predefined, and a payload size of the second part may be determined based on information carried in the first part.

The network device may decode the first part based on the predefined payload size of the first part, to obtain the information carried in the first part. The network device may determine the payload size of the second part based on the information obtained from the first part, and then decode the second part to obtain information carried in the second part.

In embodiments of this application, the "payload size" and a "length", the "overheads" and "bit overheads", and the like are often used alternately, and express consistent meanings in the following descriptions unless otherwise stated.

It should be understood that the first part and the second part may be similar to a part 1 (part 1) and a part 2 (part 2) of CSI defined in the NR protocol TS38.214 Release 15 (release 15, R15).

It should be further understood that the first part and the second part are named only for ease of differentiation, and should not constitute any limitation on this application. This application does not exclude a possibility that the first part and the second part are defined with other names in a future protocol.

It should be understood that, in this embodiment of this application, in a wireless cellular system or an urban scenario, when a distance between a terminal device and a base station is short and there is no obstacle between the terminal device and the base station, a propagation path between the terminal device and the base station may be referred to as a direct path or a direct line-of-sight (line-of-sight, LoS) path, and another path that passes a building and that has a diffraction and reflection loss is referred to as a non-line-of-sight (non-line-of-sight, NLoS) path.

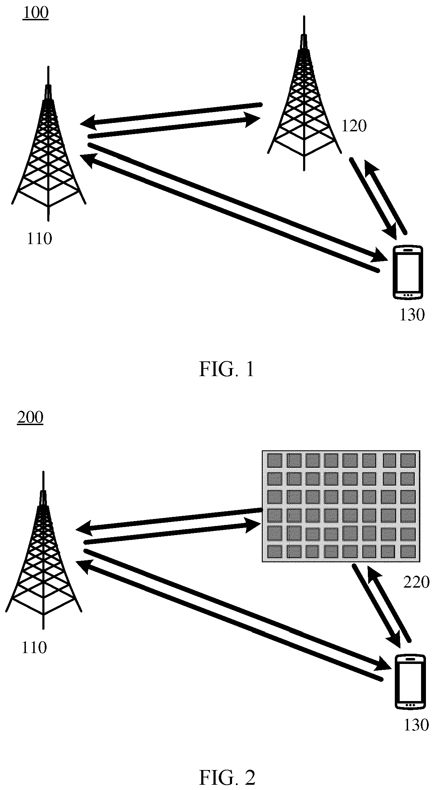

FIG. 1 is a diagram of a wireless communication system according to an embodiment of this application. As shown in FIG. 1, the wireless communication system 100 may include at least two network devices, for example, a first network device 110 and a second network device 120 shown in FIG. 1. The second network device 120 may be used as a relay (relay) station between the first network device 110 and a terminal device 130.

In a possible implementation, the second network device may alternatively be an intelligent reflecting surface. As shown in FIG. 2, an intelligent reflecting surface 220 in a wireless communication system 200 may be used as a relay station between the first network device 110 and the terminal device 130. The intelligent reflecting surface 220 may include hundreds of passive metasurface array elements.

Specifically, the wireless communication system 100 includes at least one terminal device. For example, the wireless communication system 100 shown in FIG. 1 includes the terminal device 130. The first network device and the terminal device may directly communicate with each other, for example, the first network device 110 shown in FIG. 1 may transmit data to the terminal device 130 over a downlink, or the terminal device 130 may transmit data to the first network device over an uplink. When a transmission path between the first network device and the terminal device is blocked, the first network device may perform data transmission with the terminal device through the second network device. As shown in FIG. 1, the first network device 110 transmits, to the second network device 120, data to be transmitted to the terminal device 130, and the second network device 120 reflects the received data to the terminal device 130. Alternatively, the terminal device 130 transmits, to the second network device 120, data to be transmitted to the first network device 110, and the second network device 120 reflects the received data to the first network device 110.

It should be understood that FIG. 1 shows only one first network device, one terminal device, and one second network device. However, this should not constitute any limitation on this application. The communication system in this embodiment of this application may further include more first network devices, second network devices, and terminal devices.

The wireless communication system 100 may support downlink MIMO. Specifically, the wireless communication system 100 provided in this embodiment of this application may support single-user multiple input multiple output (single-user multiple input multiple output, SU-MIMO), or the wireless communication system 100 may support multi-user multiple input multiple output (multi-user multiple input multiple output, MU-MIMO). The first network device 110 may send downlink data to a single user or to a plurality of users by using an existing spatial multiplexing technology. For brevity, details are not described herein again.

As shown in FIG. 1, when the wireless communication system 100 provided in this embodiment of this application is used in a multiple input multiple output scenario, each array element in the second network device may independently adjust an amplitude and a phase of an incident signal, to obtain a high array gain. In addition, the second network device may further introduce an additional propagation path, to improve channel quality.

For example, the second network device is an intelligent reflecting surface IRS. The IRS may control a status of a semiconductor device on the back of each metasurface array element, for example, controls on and off of a PIN diode, so that each array element can independently adjust an amplitude and a phase of an incident signal, to obtain a high array gain. In addition, the IRS only needs to configure a simple control circuit to control an amplitude and phase modulation factor of each array element, and does not need to have a baseband capability, and therefore has very low power consumption and costs. Therefore, an intelligent reflecting surface aided multiple input multiple output (intelligent reflecting surface aided multiple input multiple output, IRS-aided MIMO) system formed by adding the IRS to a conventional MIMO system can further improve spectrum efficiency of the system without significantly increasing power consumption and costs.

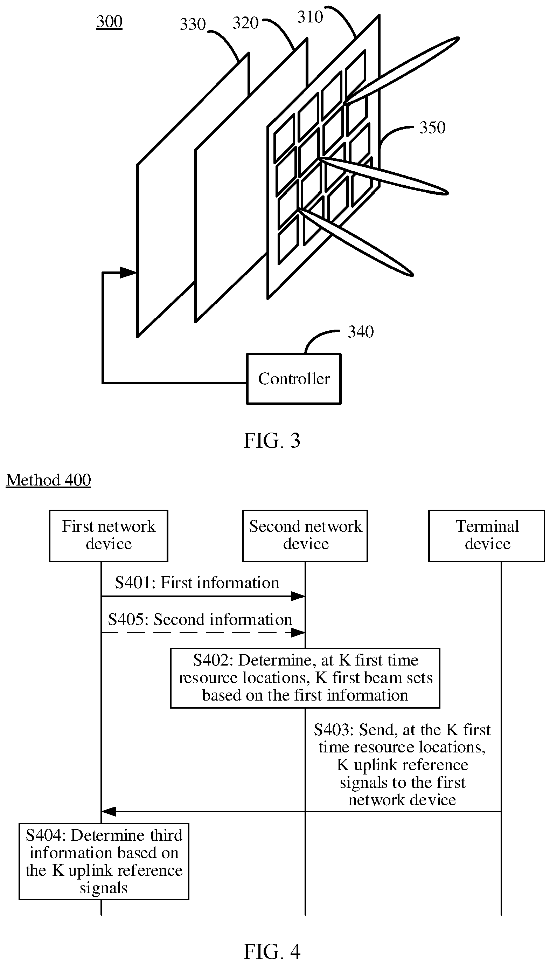

A diagram of an architecture of an IRS according to an embodiment of this application is shown in FIG. 3. The IRS 300 includes an outer layer 310, an intermediate layer 320, an inner layer 330, and a controller 340. Specifically, the outer layer 310 may include a plurality of array elements 350 formed by an electromagnetic metamaterial. For example, the outer layer 310 may include hundreds of array elements 350. It should be understood that a quantity of array elements 350 shown in FIG. 3 is merely an example. This is not limited in this embodiment of this application. An appropriate quantity of array elements 350 may be set for the outer layer 310 based on an actual service requirement.

The outer layer 310 is printed on an insulating substrate through a large quantity of adjustable/reconfigurable metal surfaces, to directly operate the incident signal. The intermediate layer 320 is made of a copper plate, and can effectively avoid signal energy leakage, that is, minimize signal energy leakage during reflection by the IRS. The inner layer 330 is responsible for activating a reflection element through one control circuit panel, and controlling, in real time, an amplitude and/or a phase shift for reflection of the incident signal.

Specifically, a PIN diode (positive-intrinsic negative diode, PIN diode) may be trapped in each array element on the IRS 300. The inner layer 330 may include a control circuit board, where the control circuit board is coupled to a PIN diode in the outer layer 310. The control circuit board in the inner layer 330 may control a bias voltage of the PIN diode, so that the PIN diode switches between an on state and an off state, to adjust the amplitude and/or the phase of the incident signal.

In a possible implementation, the controller 340 is coupled to the inner layer 330, and the controller 340 may be implemented by using programmable array logic (field programmable gate array, FPGA). The controller 340 may communicate with the first network device 110 in FIG. 1 and FIG. 2 over a wireless link or a wired link. For example, the controller 340 may receive a control signal sent by the first network device 110, and trigger the control circuit board of the inner layer 330 to control the bias voltage of the PIN diode.

Currently, in a beam management process of the IRS, because reflection gains of the IRS all come from a large-sized antenna array, a beam reflected by the IRS is usually narrow, and consequently, a delay in the beam management process of the IRS is high. For example, when a size of the IRS is 1m*1m, a 3-dB beamwidth of a reflected beam of the IRS is only about 5°, and in this case, a quantity of beams covering an entire emergent range is more than 400. Assuming that a sending periodicity of a CSI-RS/a sounding reference signal (sounding reference signal, SRS) is 20 ms, a total delay of the more than 400 beams is about 8s. In this case, a moving terminal device may deviate from an original beam, and consequently, it is difficult for the IRS to serve a terminal device moving at a middle-high speed, and a beam on the IRS fails to align, in most time, with a terminal device that really needs to be served. As a result, it is difficult to obtain potential coverage and a capacity gain of the IRS.

To alleviate the delay problem in the beam management process of the IRS, a person skilled in the art introduces a wide and narrow beam layered sweeping solution at a high frequency. To be specific, wide beam sweeping is first performed to select an optimal beam from a plurality of wide beams, and narrower beam sweeping is further performed within coverage of the optical wide beam, until an optimal narrow beam that meets a requirement is found. Specifically, in a possible implementation, the terminal device measures RSRPs of different wide beams based on a CSI-RS sent by a base station, and reports the RSRPs to the base station, and the base station selects an optimal wide beam based on reference signal received powers (reference signal received powers, RSRPs) of all wide beams. Then, based on the determined wide beam, the CSI-RS is further sent to the terminal device by using a narrower beam within the coverage of the wide beam. The terminal device measures RSRPs of different narrow beams and reports CSI to the base station, until an optimal beam that meets the requirement is found. However, applying the wide and narrow beam layered sweeping solution at the high frequency to an IRS system causes the following problems. First, a capability of reducing signaling overheads in the beam management process by using the wide and narrow beam sweeping solution is limited. For example, it is assumed that there are M narrow beams in total. In an ideal state, a quantity of times of sweeping the M narrow beams is reduced at most from M to $\log_2 M$, and in this case, the overheads in the beam management process of the IRS are reduced to a very limited extent. Second, for each terminal device, a complete wide and narrow beam sweeping process needs to be performed in the beam management process. Specifically, in the IRS system, each IRS usually needs to serve a plurality of terminal devices. In this case, the overheads in the beam management process multiply as a quantity of terminal devices increases.

In view of this, to resolve the foregoing technical problem, an embodiment of this application provides an information transmission method. An IRS generates, at different time resource locations, different beam sets based on information sent by a network device, to perform beam measurement, and uses a potential sparseness characteristic of an IRS reflection channel (that is, a channel between a base station, the IRS, and a terminal device) in space domain. In this way, in comparison with a wide and narrow beam sweeping solution in a conventional technology, overheads of the IRS in a beam management process can be effectively reduced.

FIG. 4 is a schematic flowchart of an information transmission method according to an embodiment of this application. As shown in FIG. 4, the method includes steps S401 to S405. The steps are described in detail below.

S401: A first network device sends first information to a second network device. Correspondingly, the second network device receives the first information sent by the first network device.

The first information is used by the second network device to determine, at K first time resource locations, K first beam sets, the first beam set may include at least one or more first beams, K is an integer greater than or equal to 1, and the K first time resource locations are in one-to-one correspondence with the K first beam sets. The first information may include information about the K first time resource locations and information about the K first beam sets, and the first beam set includes at least one first beam. For example, in an IRS system, when the first network device performs beam measurement for three times, the first network device may send the first information to the second network device, where the first information includes information about three time resource locations and information about three beam sets corresponding to the three time resource locations. A 1st first time resource location corresponds to a 1st first beam set.

In a possible implementation, the information about the first beam set includes a first matrix, the first matrix includes M × N elements, M represents a quantity of radiating elements of the second network device in a vertical dimension, N represents a quantity of radiating elements of the second network device in a horizontal dimension, and both M and N are integers greater than or equal to 1; and an $a^{th}$ element in the M × N elements of the first matrix is a weight of an $a^{th}$ radiating element in M × N radiating elements of the second network device, weights of K×(M × N) radiating elements of the second network device are used to generate the K first beam sets, and a is an integer greater than or equal to 1. For example, when the first matrix includes 3×4 elements, a $1^{st}$ element in the 3×4 elements may be understood as a beam weight of a $1^{st}$ element in 3×4 radiating elements, and the 3×4 radiating elements on the second network device may generate, based on values of the 3×4 elements in the first matrix, a beam set used for beam measurement.

Several manners for obtaining the first matrix in this embodiment of this application are described in detail below.

Manner 1

The first matrix may be determined based on a base matrix and a first cyclic shift, where the base matrix may include M × N elements, M represents the quantity of radiating elements of the second network device in the vertical dimension, N represents the quantity of radiating elements of the second network device in the horizontal dimension, M and N are integers greater than or equal to 1, and the M × N elements of the base matrix are in one-to-one correspondence with the M × N elements of the first matrix; and the first cyclic shift is a cyclic shift of the first matrix relative to the base matrix.

Specifically, in a possible implementation, the base matrix in this embodiment of this application may be represented as P, and a dimension of the base matrix P may be represented as M × N, where M represents a quantity of radiating elements in an IRS in the vertical dimension, and N represents a quantity of radiating elements in the IRS in the horizontal dimension. In addition, the base matrix P may meet the following condition:

$$U_N^* P U_M^* = \{Q \mid |Q_{ij}| \geq A, \forall(i,j) \in S, |Q_{ij}| \leq B, \forall(i,j) \notin S\} \quad (1)$$

$U_N^*$ represents N-dimensional inverse discrete Fourier transform on the base matrix P, and $U_M^*$ represents M-dimensional inverse discrete Fourier transform on the base matrix P; and correspondingly, $U_N$ represents N-dimensional discrete Fourier transform on the base matrix P, and $U_M$ represents M-dimensional discrete Fourier transform on the base matrix P. Q represents an angle domain matrix obtained through two-dimensional inverse discrete Fourier transform on the base matrix P, $Q_{ij}$ represents an element ij in the angle domain matrix, $|Q_{ij}|$ represents an amplitude of the element ij in the angle domain matrix, and S represents an element set.

Specifically, Formula (1) above means that two-dimensional inverse discrete Fourier transform is performed on the base matrix P, amplitudes of some elements in the angle domain matrix Q obtained through transform are greater than or equal to a threshold A, amplitudes of some other elements in the angle domain matrix Q are less than or equal to a threshold B, and both A and B are real numbers greater than 0.

It should be understood that, in this embodiment of this application, the set S and the thresholds A and B may be fixed values that are set based on experience, or may be values that are manually set. This is not limited in this embodiment of this application.

It should be further understood that an algorithm for implementing the condition (namely, Formula (1)) of the base matrix P includes a subarray division method, Gerchberg-Saxton, and the like. This is not limited in this embodiment of this application.

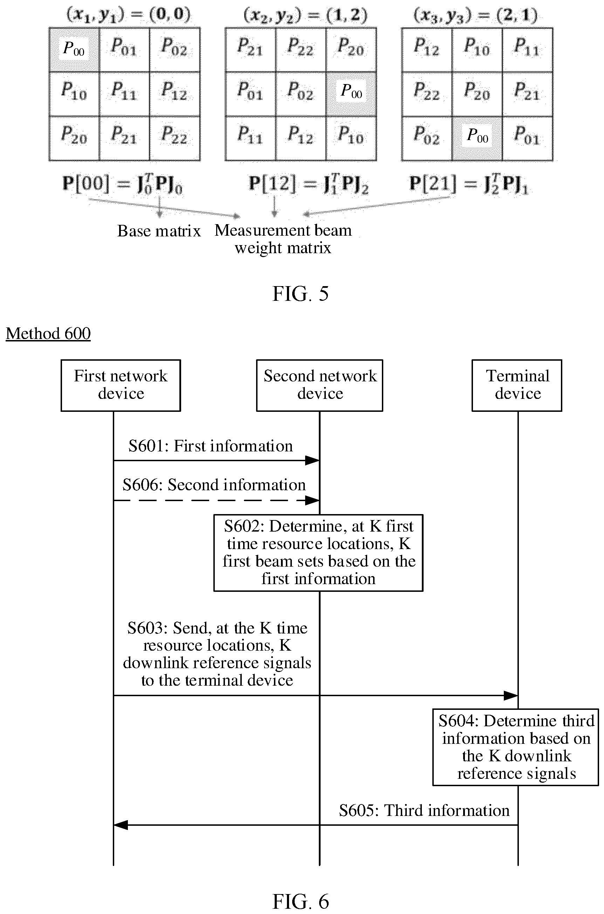

In a possible implementation, the first matrix in this embodiment of this application may be obtained by performing two-dimensional cyclic shift on the base matrix P. For example, as shown in FIG. 5, when the first network device respectively sends, at three time resource locations, a plurality of first matrices to the second network device, a $1^{st}$ first matrix corresponding to a first time resource location may be represented by $(x_1, y_1) = (0, 0)$. To be specific, the $1^{st}$ first matrix may be obtained by performing horizontal cyclic shift by 0 bits and vertical cyclic shift by 0 bits on the base matrix P, which may be represented by using a formula $P[00] = J_0^T P J_0$, where P[00] represents the $1^{st}$ first matrix. A $2^{nd}$ first matrix corresponding to a second time resource location may be represented by $(x_2, y_2) = (1, 2)$. In this case, the $2^{nd}$ first matrix may be obtained by performing horizontal cyclic shift by 1 bit and vertical cyclic shift by 2 bits on the base matrix P, which may be represented by using a formula $P[12] = J_1^T P J_2$. A $3^{rd}$ first matrix corresponding to a third time resource location may be represented by $(x_3, y_3) = (2, 1)$. In this case, the $3^{rd}$ first matrix may be obtained by performing horizontal cyclic shift by 2 bits and vertical cyclic shift by 1 bit on the base matrix P, which may be represented by using a formula

$$P[21] = J_2^T P J_1.$$

It should be understood that, based on a characteristic of discrete Fourier transform, the first matrix may meet the following characteristic: A first matrix used for beam measurement each time has a same beam directivity pattern as the base matrix P, where the first matrix may be represented by $(x_k, y_k)$, where k is a positive integer greater than or equal to 1 and less than or equal to K. Specifically, this may be represented by using the following formula:

$$|U_N^* P[x_k y_k] U_M^*| = |Q| \quad (2)$$

It should be understood that, in this embodiment of this application, the first matrix may be referred to as a weight matrix, a measurement beam matrix, or a measurement beam weight matrix. This is not limited in this embodiment of this application.

In a possible implementation, the first network device sends a base matrix and a cyclic shift value to the second network device, and the second network device determines a first matrix based on the base matrix and the cyclic shift value.

It should be understood that, in this embodiment of this application, the base matrix may be determined in the following two manners.

In a first manner, the base matrix in this embodiment of this application may be determined by notifying the second network device of a value of each element in the base matrix. For example, the first network device may send values of the $M \times N$ elements in the base matrix to the second network device, and the second network device determines the base matrix based on the values of the $M \times N$ elements.

It should be understood that, in this embodiment of this application, the first network device or another network device may notify the second network device of the value of each element in the base matrix. This is not limited in this embodiment of this application.

In a second manner, the base matrix in this embodiment of this application may be further determined by notifying the second network device of an index corresponding to a codeword in a codebook. For example, the first network device sends an index corresponding to a first codeword in a first codebook to the second network device, where the first codebook is a matrix set of the base matrix, the first codebook includes a plurality of first codewords, each codeword corresponds to one index, and the first codeword indicates the base matrix; and the second network device determines the base matrix based on the index corresponding to the first codeword in the first codebook.

For example, in this embodiment of this application, the first codebook may be a Type I codebook, which may be specifically represented as follows:

$$\mathbf{u}_x = \left[ 1, \cdots, e^{j2\pi x(N-1)/O_2 N} \right], x = 0, \cdots, O_2 N - 1 \quad (3)$$

$$\mathbf{v}_y = \left[ 1, \cdots, e^{j2\pi y(M-1)/O_1 M} \right], y = 0, \cdots, O_1 M - 1 \quad (4)$$

$$\boldsymbol{\theta}_{x,y} = \mathbf{v}_y \otimes \mathbf{u}_x \quad (5)$$

$O_1$ represents a sampling parameter in a vertical direction, $O_2$ represents a sampling parameter in a horizontal direction, M represents an antenna port configuration in the vertical direction, and N represents an antenna port configuration in the horizontal direction. $\mathbf{u}_x$ represents a DFT beam in the horizontal direction, $\mathbf{v}_y$ represents a DFT beam in the vertical direction, $\otimes$ represents a Kronecker product, and $\theta_{x,y}$ represents a two-dimensional DFT codebook.

It should be understood that, in this embodiment of this application, the first network device or another network device may notify the second network device of the index corresponding to the codeword in the codebook. This is not limited in this embodiment of this application.

It should be further understood that the first codebook may be a codebook preconfigured in the second network device, or may be a codebook obtained from the another network device. This is not limited in this application.

It should be understood that, in a possible implementation, when the first network device sends the cyclic shift value to the second network device, the base matrix may be predefined in the second network device, or the base matrix may be sent to the second network device before or after the first network device sends the first information. Alternatively, the base matrix may be sent to the second network device through the another network device. This is not limited in this embodiment of this application.

For example, in this embodiment of this application, the method 400 further includes step S405: The first network device sends second information to the second network device, where the second information includes the base matrix. It should be further understood that step S405 may be performed before S401, or may be performed after S401. This is not limited in this embodiment of this application.

Manner 2

The first matrix in this embodiment of this application may be determined by notifying the second network device of a value of each element in the first matrix. For example, the first network device may send values of the $M \times N$ elements in the first matrix to the second network device, and the second network device determines the first matrix based on the values of the $M \times N$ elements.

It should be understood that, in this embodiment of this application, the first network device or another network device may notify the second network device of the value of each element in the first matrix. This is not limited in this embodiment of this application.

Manner 3

The first matrix in this embodiment of this application may be further determined by notifying the second network device of an index corresponding to a codeword in a codebook. For example, the first network device sends an index corresponding to a first codeword in a second codebook to the second network device, where the second codebook is a matrix set of the first matrix, the second codebook includes a plurality of first codewords, each codeword corresponds to one index, and the first codeword indicates the first matrix; and the second network device determines the first matrix based on the index corresponding to the first codeword in the second codebook.

It should be understood that, in this embodiment of this application, the first network device or another network device may notify the second network device of the index corresponding to the codeword in the codebook. This is not limited in this embodiment of this application.

It should be further understood that the second codebook may be a codebook preconfigured in the second network device, or may be a codebook obtained from the another network device. This is not limited in this application.

The first matrix in this embodiment of this application may be further determined based on a direction angle of a beam in a first beam set. For example, the first network device sends information about the direction angle of the first beam set to the second network device, and the second network device determines a first matrix based on the information about the direction angle of the first beam set. In a possible implementation, the direction angle of the beam in the first beam set may be indicated by using the index corresponding to the codeword in the codebook.

It should be understood that, in this embodiment of this application, the first network device or another network device may notify the second network device of the information about the direction angle of the beam in the first beam set. This is not limited in this embodiment of this application.

S402: The second network device determines, at the K first time resource locations, the K first beam sets based on the first information sent by the first network device.

Specifically, the second network device may respectively generate, at the K first time resource locations, the K first beam sets based on the information about the K first time resource locations and the information about the K first beam sets in the first information.

For example, the first network device may send the first information to the second network device, where the first information includes information about the 1st first time resource location and information about the 1st first beam set; and the second network device determines, at the 1st first time resource location, a 1st beam set based on the first information, where the 1st beam set may include a plurality of beams.

In a possible implementation, when the information about the first beam set includes the first matrix, the second network device may determine the first beam set based on the first time resource location and the first matrix.

It should be understood that a specific manner for determining the first matrix in this embodiment of this application is described in detail in S401. For brevity, details are not described herein again.

S403: A terminal device sends, at the K first time resource locations, K uplink reference signals to the first network device.

Correspondingly, the first network device receives, at the K first time resource locations, the K uplink reference signals sent by the terminal device, where the K uplink reference signals are signals forwarded by the second network device to the first network device by using the K first beam sets, and the K uplink reference signals are in one-to-one correspondence with the K first beam sets.

For example, the terminal device may forward a 1st uplink reference signal to the first network device on the 1st first beam set corresponding to the 1st time resource location on the second network device.

It should be understood that, in this embodiment of this application, the terminal device may directly send the uplink reference signal to the network device, or may send the uplink reference signal in a manner in which the uplink reference signal first reaches an intelligent reflecting surface and then is forwarded to the terminal device through the intelligent reflecting surface. This is not limited in this embodiment of this application.

It should be understood that in this embodiment of this application, the uplink reference signal may be an SRS. In an example, this is not limited in this embodiment of this application.

In a possible implementation, the terminal device may respectively send, at the K first time resource locations, the K uplink reference signals to the first network device. For example, when the first network device sends, to the second network device at three time resource locations, information about beam sets (for example, three first matrices) corresponding to the three time resource locations, the terminal device may send, to the first network device at the three time resource locations, three SRSs corresponding to the three time resource locations.

S404: The first network device determines third information based on the K uplink reference signals.

Specifically, the first network device determines the third information based on the K uplink reference signals, where the third information indicates a second beam set, and the second beam set is used by the second network device to forward, to the first network device, uplink data sent by the terminal device, or the second beam set is used by the second network device to forward, to the terminal device, downlink data sent by the first network device.

For example, the second beam set may be a beam set with optimal channel quality.

It should be understood that, in this embodiment of this application, the second beam set may be in the K first beam sets, or may not be in the K first beam sets. In an example, this is not limited in this embodiment of this application.

The third information includes information about whether the terminal device is served by the second network device, identification information of an optimal second network device serving the terminal device, and identification information of an optimal beam corresponding to the optimal second network device serving the terminal device.

For example, in this embodiment of this application, the first network device may determine, based on K SRSs reported by the terminal device, whether a current terminal device is served by the second network device, that is, whether a terminal device reporting the K SRSs is within coverage of a beam on the second network device. When the terminal device is served by the second network device, the first network device further needs to determine identification information of an optimal second network device serving the terminal device. Further, after the first network device determines the identification information of the optimal second network device serving the terminal device, the first network device further needs to determine identification information of an optimal beam that is on the optimal second network device and that serves the terminal device.

In a possible implementation, the first network device may further send fourth information to the second network device, where the fourth information is used by the second network device to determine the optimal beam set. The second network device may forward, to the first network device by using the optimal beam set, the uplink data sent by the terminal device, or the second network device may forward, to the terminal device by using the optimal beam set, the downlink data sent by the first network device.

It should be understood that the information (for example, the first information and the second information) in the method 400 may be carried in radio resource control (radio resource control, RRC) signaling or media access control control element (media access control control element, MAC CE) signaling. This is not limited in this embodiment of this application.

Specifically, in this embodiment of this application, according to the foregoing information transmission method, the second network device may determine, by using the first information sent by the first network device, a beam set that meets a task requirement, and further use a potential sparseness characteristic of an intelligent reflecting surface transmit channel (namely, network device-intelligent reflecting surface-terminal device) in space domain. In this way, signaling overheads in a beam management process can be effectively reduced in comparison with a wide and narrow beam sweeping solution in a conventional technology.

The following describes the method 400 in detail with reference to a reflection channel model and a system model.

In a possible implementation, a reflection channel model between the network device, the intelligent reflecting surface, and the terminal device may be represented as follows:

$$\mathbf{H}_{cascade}(f) = \mathbf{A}_r^{UE} \mathbf{\Sigma}_r(f) \left(\mathbf{A}_r^{IRS}\right)^T \mathbf{\Phi} \mathbf{A}_t^{IRS} \mathbf{\Sigma}_t(f) \left(\mathbf{A}_t^{BS}\right)^T \quad (6)$$

$\mathbf{H}_{cascade}(f) \in \mathcal{C}^{N_R \times N_T}$, $\mathbf{H}_{cascade}(f)$ represents a reflection channel between the network device, the intelligent reflecting surface, and the terminal device on a frequency $f$, $N_R$ represents a quantity of ports on which the terminal device receives a signal, and $N_T$ represents a quantity of ports on which the network device sends a signal. $\mathbf{A}_r^{UE} = \left[\mathbf{a}_1^{UE}, \cdots, \mathbf{a}_P^{UE}\right] \in \mathcal{C}^{N_R \times P}$, $\mathbf{A}_r^{UE} = \left[\mathbf{a}_1^{UE}, \cdots, \mathbf{a}_P^{UE}\right]$ represents a steering vector matrix of P paths on the terminal device side on a link between the intelligent reflecting surface and the terminal device, $\mathbf{a}_p^{UE}$ represents a steering vector of a $p^{th}$ path on the terminal device side, and $1 \le p \le P$.

$\mathbf{A}_t^{BS} = \left[ \mathbf{a}_1^{BS}, \cdots, \mathbf{a}_L^{BS} \right] \in \mathcal{C}^{N_T \times L}$, $\mathbf{A}_t^{BS} = \left[ \mathbf{a}_1^{BS}, \cdots, \mathbf{a}_L^{BS} \right]$ represents a steering vector matrix of L paths on the network device side on a link between the intelligent reflecting surface and the network device, $\mathbf{a}_l^{BS}$ represents a steering vector of an $l^{th}$ path on the terminal device side, and $1 \le l \le L$.

$\Sigma_r(f) = \operatorname{diag}\left( g_1^{UE} e^{-j2\pi\tau_1^{UE} f}, \cdots, g_P^{UE} e^{-j2\pi\tau_P^{UE} f} \right) \in \mathcal{C}^{P \times P}$, where $g_p^{UE} e^{-j2\pi\tau_p^{UE} f}$ indicates that a complex gain of the $p^{th}$ path between the reflecting surface and the terminal device on the frequency $f$ is $g_p^{UE}$, and a delay is represented by $\tau_p^{UE}$. $\Sigma_t(f) = \operatorname{diag}\left( g_1^{BS} e^{-j2\pi\tau_1^{BS} f}, \cdots, g_L^{BS} e^{-j2\pi\tau_L^{BS} f} \right) \in \mathcal{C}^{L \times L}$, where

$g_l^{BS} e^{-j2\pi\tau_l^{BS} f}$ indicates that a complex gain of the $l^{th}$ path between the intelligent reflecting surface and the network device on the frequency $f$ is $g_l^{BS}$, and a delay is represented by

$\tau_l^{BS}$. $\mathbf{A}_r^{IRS} = \left[ \mathbf{a}_{r,1}^{IRS}, \cdots, \mathbf{a}_{r,P}^{IRS} \right] \in \mathcal{C}^{NM \times P}$, $\mathbf{A}_r^{IRS} = \left[ \mathbf{a}_{r,1}^{IRS}, \cdots, \mathbf{a}_{r,P}^{IRS} \right]$ represents a steering vector matrix of p paths on the intelligent reflecting surface side on a link between the intelligent reflecting surface and the terminal

device, $\mathbf{a}_{r,p}^{IRS}$ represents a steering vector of a $p^{th}$ path on the intelligent reflecting surface side, $N$ represents a quantity of radiating elements of the intelligent reflecting surface in the horizontal dimension, and $M$ represents a quantity of radiating elements of the intelligent reflecting surface in the vertical dimension.

$\mathbf{A}_t^{IRS} = \left[ \mathbf{a}_{t,1}^{IRS}, \cdots, \mathbf{a}_{t,L}^{IRS} \right] \in \mathcal{C}^{NM \times L}$, $\mathbf{A}_t^{IRS} = \left[ \mathbf{a}_{t,1}^{IRS}, \cdots, \mathbf{a}_{t,L}^{IRS} \right]$ represents a steering vector matrix of L paths on the intelligent reflecting surface side on a link between the intelligent reflecting surface and the network device,

$\mathbf{a}_{t,l}^{IRS}$ represents a steering vector of an $l^{th}$ path on the intelligent reflecting surface side, $N$ represents a quantity of radiating elements of the intelligent reflecting surface in the horizontal dimension, and $M$ represents a quantity of radiating elements of the intelligent reflecting surface in the vertical dimension.

$\Phi \in \mathcal{C}^{NM \times NM}$ represents a diagonal matrix, and each element on a diagonal of the diagonal matrix corresponds to a weight value of each radiating element on the intelligent reflecting surface.

An information transmission method provided in embodiments of this application is described in detail below with reference to the system model.

In a possible implementation, for a send port on the terminal device, the terminal device may send, at a $k^{th}$ time resource location, an uplink reference signal to the network device. Correspondingly, that the first network device receives the specified uplink reference signal sent by the terminal device may be represented as follows:

$$\tilde{\mathbf{y}}_k(f) = \left( \mathbf{A}_t^{BS} \Sigma_t(f) \left( \mathbf{A}_t^{IRS} \right)^T \Phi_k \mathbf{A}_r^{IRS} \Sigma_r(f) \left[ 1, \cdots, 1 \right]^T + \mathbf{h}_d \right) x + \tilde{\mathbf{n}} \quad (7)$$

In a possible implementation, the uplink reference signal is an SRS.

$X$ represents an SRS, and $\mathbf{h}_d \in \mathcal{C}^{N_T \times 1}$ represents a direct transmission channel that is from the network device to a port of the terminal device and that is not reflected by the intelligent reflecting surface. $\Phi_k$ represents a weight of a $k^{th}$ beam on the intelligent reflecting surface at the $k^{th}$ time resource location for sending the SRS. $\tilde{\mathbf{n}} \in \mathcal{C}^{N_T \times 1}$ represents received noise of the network device.

It should be understood that, in a possible implementation, the network device may notify the intelligent reflecting surface of the $k^{th}$ time resource location and the weight of the beam corresponding to the $k^{th}$ time resource location.

Specifically, after the network device uses a receiving weight to receive $\tilde{\mathbf{y}}_k(f)$ based on a direction steering vector **W** from the network device to the intelligent reflecting surface, the following may be represented:

$$y_k(f) = \mathbf{w}^H \tilde{\mathbf{y}}_k(f) = \mathbf{w}^H \left( \mathbf{A}_t^{BS} \mathbf{\Sigma}_t(f) \left( \mathbf{A}_t^{IRS} \right)^T \mathbf{\Phi}_k \mathbf{A}_r^{IRS} \mathbf{\Sigma}_r(f)[1,\cdots,1]^T + \mathbf{h}_d \right) x + \mathbf{w}^H \tilde{\mathbf{n}} \quad (8)$$

In a possible implementation, when $\mathbf{n} = \mathbf{w}^H \tilde{\mathbf{n}}$, it can be learned that $\mathbf{n}$ and $\tilde{\mathbf{n}}$ have a same distribution, and energy of the noise remains unchanged.

Because the link between the first network device and the intelligent reflecting surface is a LoS path, the following may be obtained:

$$\mathbf{w}^H \mathbf{A}_t^{BS} \approx [1,0,\cdots,0], \text{ and } \mathbf{w}^H \mathbf{h}_d \approx 0$$

In other words, $y_k(f)$ may be further simplified as follows:

$$\begin{aligned}
y_k(f) &\approx \left[ g_1^{BS} e^{-j2\pi\tau_1^{BS}f}, 0, \cdots, 0 \right] \left( \mathbf{A}_t^{IRS} \right)^T \mathbf{\Phi}_k \mathbf{A}_r^{IRS} \left[ g_1^{UE} e^{-j2\pi\tau_1^{UE}f}, \cdots, g_P^{UE} e^{-j2\pi\tau_P^{UE}f} \right]^T + \mathbf{n} \\
&= g_1^{BS} e^{-j2\pi\tau_1^{BS}f} \left( \mathbf{a}_{t,1}^{IRS} \right)^T \mathbf{\Phi}_k \left( \sum_p g_p^{UE} e^{-j2\pi\tau_1^{UE}f} \mathbf{a}_{r,p}^{IRS} \right) + \mathbf{n} \quad (9) \\
&= \mathbf{\theta}_k^T \left( \sum_p \bar{g}_p \left( \bar{\mathbf{a}}_p^{IRS} \right) e^{-j2\pi\bar{\tau}_p f} \right) + \mathbf{n}
\end{aligned}$$

$$\mathbf{\theta}_k = \mathrm{diag}(\mathbf{\Phi}_k), \quad \bar{g}_p = g_1^{BS} g_p^{UE}, \quad \bar{\tau}_p = \tau_1^{BS} + \tau_p^{UE}, \text{ and } \bar{\mathbf{a}}_p^{IRS} = \mathbf{a}_{t,1}^{IRS} \odot \mathbf{a}_{r,p}^{IRS}.$$

In a possible implementation, when SRS measurement is performed for K times, a matrix received on the intelligent reflecting surface may be represented as follows:

$$\mathbf{Y} = \begin{bmatrix} y_1(f_1) & y_2(f_1) & \cdots & y_K(f_1) \\ y_1(f_2) & y_2(f_2) & \cdots & y_K(f_2) \\ \vdots & \vdots & \ddots & \vdots \\ y_1(f_{N_{sc}}) & y_2(f_{N_{sc}}) & \cdots & y_K(f_{N_{sc}}) \end{bmatrix}_{N_{sc} \times K} \quad (10)$$

$f_1, \cdots, f_{N_{sc}}$ represent subcarrier frequencies.

By performing DFT delay domain projection on the matrix Y, and extracting a row corresponding to a strongest path, the following may be obtained:

$$\mathbf{Z} = \mathbf{U}_{DFT}^{delay} \mathbf{Y} \Rightarrow l^* = \underset{l=1,\cdots,L_{\max}}{\arg\max} \left\| \mathbf{Z}(l,:) \right\|_2^2 \quad (11)$$

$$\mathbf{Z}(l^*,k) = \mathbf{\theta}_k^T \left( \bar{g}_{l^*} \bar{\mathbf{a}}_{l^*}^{IRS} + \mathbf{r} \right) + n_{\mathrm{eff}}$$ , and **r** represents a total residual projection of other paths on an $l^*$ path.

It is assumed that $\bar{\mathbf{h}} = \bar{g}_{l^*} \bar{\mathbf{a}}_{l^*}^{IRS} + \mathbf{r} \in \mathcal{C}^{NM}$ , and time variability of the channel is ignored; and in this case, the following may be obtained:

$$\mathbf{Z}(l^*,k) = \mathbf{\theta}_k^T \bar{\mathbf{h}} + n_{\mathrm{eff}} \quad (12)$$

Second, $\overline{h}$ may be rearranged into an area array form $\overline{\mathbf{H}}$, and $\theta_k$ may be rearranged into an area array form $\mathbf{P}_k \in \mathcal{C}^{N\times M}$. It should be understood that, both $\mathbf{P}_k$ and $\Phi_k$ include beam weights of NM radiating elements on the intelligent reflecting surface, and a difference lies only in arrangement forms of matrices thereof. The following may be obtained:

$$\mathbf{Z}\left(l^{*},k\right)=\left\langle \overline{\mathbf{H}},\mathbf{P}_{k}\right\rangle =\sum\nolimits_{x,y}\overline{\mathbf{H}}\left(x,y\right)\mathbf{P}_{k}\left(x,y\right) \quad (13)$$

In a possible implementation, $\mathbf{P}_k$ is obtained by performing two-dimensional cyclic shift on the base matrix $\mathbf{P}$. Specifically, $\mathbf{P}_k$ may be expressed as follows:

$$\mathbf{P}_{k}=\mathbf{J}_{r[t]}^{T}\mathbf{P}\mathbf{J}_{c[t]}, r[t]\in 1,\cdots,N, c[t]\in 1,\cdots,M$$
$$k=c[t]+\left(r[t]-1\right)M \quad (14)$$

$\mathbf{J}_{r[t]}^{T}\in\mathcal{C}^{N\times N}$ represents a row cyclic shift matrix, and $\mathbf{J}_{c[t]}\in\mathcal{C}^{M\times M}$ represents a column cyclic shift matrix. Z ($l^{*}$,:) obtained through K times of measurement may be represented in a form of performing two-dimensional circular convolution between $\overline{\mathbf{H}}$ and the base matrix $\mathbf{P}$ and then performing undersampling, that is:

$$Z(l^{*},1:K)=(\bar{H}\theta P)_{\Omega}=G_{\Omega}=G\odot N_{\Omega} \quad (15)$$

A set $\Omega$ indicates that $K$ cyclic shifts are selected from all $NM$ cyclic shifts of the base matrix $\mathbf{P}$. $\mathbf{N}_{\Omega}$ represents a sampling matrix, where a cyclic shift belonging to the set $\Omega$ is represented as 1, and the others are represented as 0. In a possible implementation, $\mathbf{N}_{\Omega}$ may be ignored first, and $\mathbf{G}$ may be further decomposed into the following by using a convolution theorem:

$$U_{N}^{*}GU_{M}^{*}=(U_{N}^{*}\bar{H}U_{M}^{*})\odot(U_{N}^{*}PU_{M}^{*})=X\odot Q \quad (16)$$

$X$ represents two-dimensional angle domain transform of the spatial-domain two-dimensional channel $\overline{\mathbf{H}}$, and has a sparse characteristic, where there are a few strong non-zero values. Even if an NLoS path between the intelligent reflecting surface and the terminal device also has a sparse characteristic, energy of the path between the intelligent reflecting surface and the terminal device is small. $\mathbf{Q}$ in Formula (16) may be designed based on a requirement. In a possible implementation, $\mathbf{Q}$ meets that a gain is constantly equal to A at a specific element position (corresponding to an angle), and a gain is 0 at another element position (corresponding to an angle), as described above. A physical meaning of Formula 16 is that equal gain measurement is performed on $X$ in preset candidate angle space. Therefore, $X\odot Q$ does not change a path relative relationship of $X$, and measurement without distortion can be implemented. Therefore, a position of a maximum value of $U_{N}^{*}GU_{N}^{*}$ may be used to represent an optimal measurement beam.

In a possible implementation, considering impact of $\mathbf{N}_{\Omega}$, two-dimensional discrete Fourier transform is performed on $\mathbf{Z}(k^{*},1:K)$, and the following may be obtained:

$$U_{N}^{*}Z(l^{*},1:K)U_{M}^{*}=U_{N}^{*}G_{\Omega}U_{M}^{*}=\frac{K}{NM}(X\odot Q)\theta K_{\Omega}, K_{\Omega}=\frac{K}{NM}U_{N}^{*}N_{\Omega}U_{M}^{*} \quad (17)$$

Specifically, it may be learned according to Formula (17) that when beam measurement is performed for $K < NM$ times, an obtained measurement result may be understood as that a plurality of cyclic shifts are performed on X ⊙ Q first and then addition is performed. However, in this manner, undersampling leakage interference occurs, and an energy loss due to $K < NM$ is caused. However, in this embodiment of this application, determining an optimal beam direction, that is, determining a location of a maximum value of $\mathbf{U}_{N}^{*}\mathbf{Z}\left(l^{*},1:K\right)\mathbf{U}_{M}^{*}$ is slightly affected.

For a communication system including a plurality of intelligent reflecting surfaces, each intelligent reflecting surface corresponds to a direction steering vector between a different network device and the intelligent reflecting surface, that is, each intelligent reflecting surface corresponds to one receiving weight $\mathbf{W}$. In this embodiment of this application, the K SRSs may be received based on different receiving weights $\mathbf{W}$, and estimation is separately performed by using the foregoing algorithms, and then maximum values of $\mathbf{U}_N^* \mathbf{Z}\left(l^*, 1:K\right)\mathbf{U}_M^*$ under different receiving weights are compared. An intelligent reflecting surface corresponding to a receiving weight for the maximum value is an optimal intelligent reflecting surface.

In another possible implementation, if $\left\|\mathbf{w}^H \tilde{\mathbf{y}}_q\left(f\right)\right\|_2^2 / \left\|\tilde{\mathbf{y}}_q\left(f\right)\right\|_2^2 \le B$ is satisfied for the different receiving weights **W**, that is, a proportion of reflection channel energy in total channel energy is less than a threshold B, it is considered that the terminal device is not served by the intelligent reflecting surface. In other words, the terminal device fails to receive a signal or data sent via the intelligent reflecting surface.

It should be understood that in this embodiment of this application, the estimation algorithms shown above are merely an example. This is not limited in this embodiment of this application.

FIG. 6 is a schematic flowchart of another information transmission method according to an embodiment of this application. As shown in FIG. 6, the method includes steps S601 to S606. The steps are described in detail below.

It should be understood that steps S601, S602, and S606 in FIG. 6 are the same as or similar to steps S401, S402, and S406 in FIG. 4. For brevity, details are not described herein again.

S603: A first network device sends, at K time resource locations, K downlink reference signals to a terminal device.

Correspondingly, the terminal device receives, at the K time resource locations, the K downlink reference signals sent by the first network device, where the K downlink reference signals are signals forwarded by a second network device to the terminal device by using K first beam sets, the K downlink reference signals are in one-to-one correspondence with the K first beam sets, and the K downlink reference signals are used by the terminal device to determine third information.

It should be understood that in this embodiment of this application, the downlink reference signal may be a CSI-RS. In an example, this is not limited in this embodiment of this application.

For example, when the first network device performs beam measurement for three times, the first network device may respectively send, at three time resource locations, three CSI-RSs to the terminal device.

S604: The terminal device determines the third information based on the K downlink reference signals.

Specifically, the terminal device receives the K downlink reference signals sent by the first network device, and determines the third information based on the K downlink reference signals, where the third information indicates a second beam set, and the second beam set is used by the second network device to forward, to the first network device, uplink data sent by the terminal device, or the second beam set is used by the second network device to forward, to the terminal device, downlink data sent by the first network device.

It should be understood that, in this embodiment of this application, the second beam set may be in the K first beam sets, or may not be in the K first beam sets. In an example, this is not limited in this embodiment of this application.

The third information includes information about whether the terminal device is served by the second network device, identification information of an optimal second network device serving the terminal device, and identification information of an optimal beam corresponding to the optimal second network device serving the terminal device.

For example, in this embodiment of this application, the terminal device may determine, based on K CSI-RSs sent by the first network device, whether a current terminal device is served by the second network device, that is, whether a terminal device receiving the K CSI-RSs is within coverage of a beam on the second network device. When the terminal device is served by the second network device, the terminal device further needs to determine identification information of an optimal second network device serving the terminal device. Further, after the terminal device determines the identification information of the optimal second network device serving the terminal device, the terminal device further needs to determine identification information of an optimal beam that is on the optimal second network device and that serves the terminal device.

It should be understood that the third information determined by the terminal device in the method 600 may alternatively be determined by using the algorithms shown in the reflection channel model and the system model in the method 400. For brevity, details are not described herein again.

S605: The terminal device sends the third information to the first network device.

It should be understood that, in this embodiment of this application, the terminal device may directly send the third information to the network device, or may send the third information in a manner in which the third information first reaches an intelligent reflecting surface and then is forwarded to the terminal device through the intelligent reflecting surface. This is not limited in this embodiment of this application.

It should be understood that information (for example, the third information) in the method 600 may be carried in radio resource control (radio resource control, RRC) signaling or media access control control element (media access control control element, MAC CE) signaling. This is not limited in this embodiment of this application.

Specifically, in this embodiment of this application, according to the foregoing information transmission method, the second network device may determine, by using the first information sent by the first network device, a beam set that meets a task requirement, and use a potential sparseness characteristic of an intelligent reflecting surface transmit channel (namely, network device-intelligent reflecting surface-terminal device) in space domain. In this way, signaling overheads in a beam management process can be effectively reduced in comparison with a wide and narrow beam sweeping solution in a conventional technology.

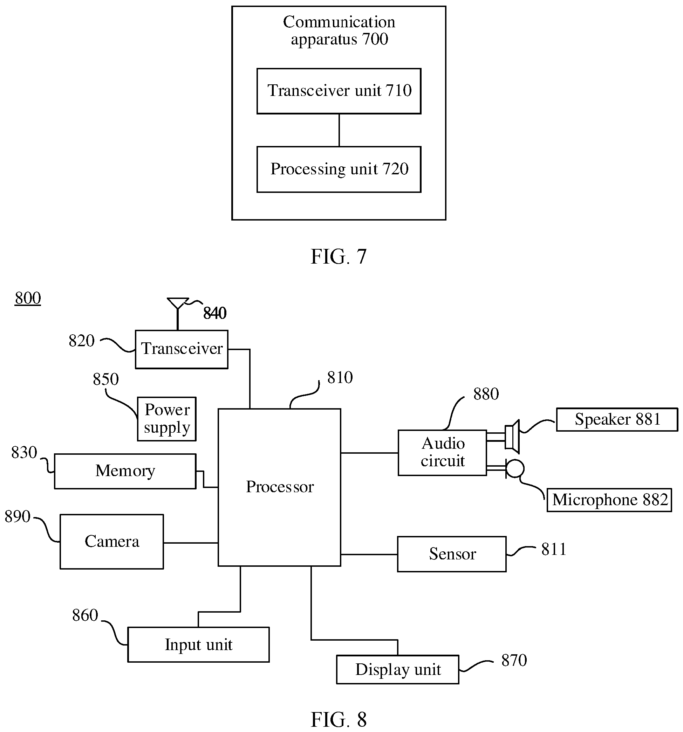

FIG. 7 is a block diagram of a communication apparatus according to an embodiment of this application. As shown in FIG. 7, the communication apparatus 700 may include a transceiver unit 710 and a processing unit 720.

In a possible design, the communication apparatus 700 may correspond to the terminal device in the foregoing method embodiments, for example, may be a terminal device, or a component (for example, a chip or a chip system) disposed in the terminal device.

It should be understood that the communication apparatus 700 may correspond to the terminal device in the method 400 and the method 600 according to embodiments of this application. The communication apparatus 700 may include units configured to perform the methods performed by the terminal device in the method 400 in FIG. 4 and the method 600 in FIG. 6. In addition, the units in the communication apparatus 700 and the foregoing other operations and/or functions are respectively for implementing corresponding procedures of the method 400 in FIG. 4 and the method 600 in FIG. 6.

When the communication apparatus 700 is configured to perform the method 400 in FIG. 4, the transceiver unit 710 may be configured to perform step S403 in the method 400. It should be understood that a specific process in which the units perform the foregoing corresponding steps is described in detail in the foregoing method embodiments, and for brevity, details are not described herein again.

When the communication apparatus 700 is configured to perform the method 600 in FIG. 6, the transceiver unit 710 may be configured to perform S603 and S605 in the method 600, and the processing unit 720 may be configured to perform S604 in the method 600. It should be understood that a specific process in which the units perform the foregoing corresponding steps is described in detail in the foregoing method embodiments, and for brevity, details are not described herein again.

It should be further understood that when the communication apparatus 700 is a terminal device, the transceiver unit 710 in the communication apparatus 700 may be implemented by a transceiver, for example, may correspond to a transceiver 820 in a terminal device 800 shown in FIG. 8, and the processing unit 720 in the communication apparatus 700 may be implemented by at least one processor, for example, may correspond to a processor 810 in the terminal device 800 shown in FIG. 8.

It should be further understood that when the communication apparatus 700 is a chip or a chip system disposed in the terminal device, the transceiver unit 710 in the communication apparatus 700 may be implemented by an input/output interface, and the processing unit 720 in the communication apparatus 700 may be implemented by a processor, a microprocessor, an integrated circuit, or the like integrated in the chip or the chip system.

In another possible design, the communication apparatus 700 may correspond to the first network device in the foregoing method embodiments, for example, may be a first network device, or a component (for example, a chip or a chip system) disposed in the first network device.

It should be understood that the communication apparatus 700 may correspond to the first network device in the method 400 and the method 600 according to embodiments of this application. The communication apparatus 700 may include units configured to perform the methods performed by the first network device in the method 400 in FIG. 4 and the method 600 in FIG. 6. In addition, the units in the communication apparatus 700 and the foregoing other operations and/or functions are respectively for implementing corresponding procedures of the method 400 in FIG. 4 and the method 600 in FIG. 6.

When the communication apparatus 700 is configured to perform the method 400 in FIG. 4, the transceiver unit 710 may be configured to perform S401, S403, and S405 in the method 400, and the processing unit 720 may be configured to perform S404 in the method 400. It should be understood that a specific process in which the units perform the foregoing corresponding steps is described in detail in the foregoing method embodiments, and for brevity, details are not described herein again.

When the communication apparatus 700 is configured to perform the method 600 in FIG. 6, the transceiver unit 710 may be configured to perform steps S601, S603, S605, and S606 in the method 600. It should be understood that a specific process in which the units perform the foregoing corresponding steps is described in detail in the foregoing method embodiments, and for brevity, details are not described herein again.

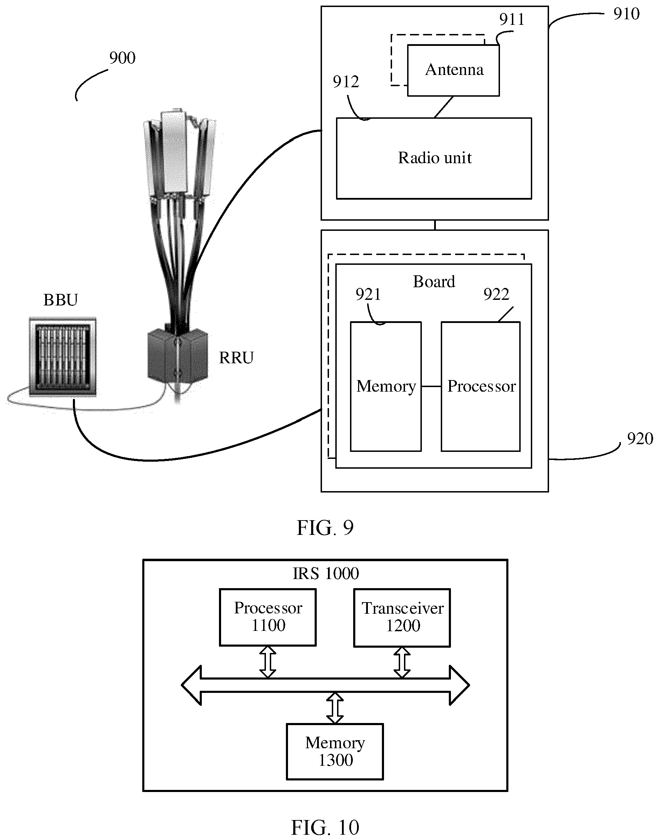

It should be further understood that when the communication apparatus 700 is a first network device, the transceiver unit 710 in the communication apparatus 700 may be implemented by a transceiver, for example, may correspond to a transceiver 920 in a network device 900 shown in FIG. 9, and the processing unit 720 in the communication apparatus 700 may be implemented by at least one processor, for example, may correspond to a processor 910 in the network device 900 shown in FIG. 9.

It should be further understood that when the communication apparatus 700 is a chip or a chip system disposed in the first network device, the transceiver unit 710 in the communication apparatus 700 may be implemented by an input/output interface, and the processing unit 720 in the communication apparatus 700 may be implemented by a processor, a microprocessor, an integrated circuit, or the like integrated in the chip or the chip system.

In another possible design, the communication apparatus 700 may correspond to the second network device in the foregoing method embodiments, for example, may be a second network device, or a component (for example, a chip or a chip system) disposed in the second network device.

It should be understood that the communication apparatus 700 may correspond to the second network device in the method 400 according to embodiments of this application. The communication apparatus 700 may include units configured to perform the method performed by the second network device in the method 400 in FIG. 4. In addition, the units in the communication apparatus 700 and the foregoing other operations and/or functions are respectively for implementing corresponding procedures of the method 400 in FIG. 4.

When the communication apparatus 700 is configured to perform the method 400 in FIG. 4, the transceiver unit 710 may be configured to perform S401 and S405 in the method 400, and the processing unit 720 may be configured to perform S402 in the method 400. It should be understood that a specific process in which the units perform the foregoing corresponding steps is described in detail in the foregoing method embodiments, and for brevity, details are not described herein again.

It should be further understood that when the communication apparatus 700 is a second network device, the transceiver unit 710 in the communication apparatus 700 may be implemented by a transceiver, for example, may correspond to the transceiver 920 in the network device 900 shown in FIG. 9, and the processing unit 720 in the communication apparatus 700 may be implemented by at least one processor, for example, may correspond to the processor 910 in the network device 900 shown in FIG. 9.

It should be further understood that when the communication apparatus 700 is a chip or a chip system disposed in the second network device, the transceiver unit 710 in the communication apparatus 700 may be implemented by an input/output interface, and the processing unit 720 in the communication apparatus 700 may be implemented by a processor, a microprocessor, an integrated circuit, or the like integrated in the chip or the chip system.

In another possible design, the communication apparatus 700 may correspond to the IRS in the foregoing method embodiments, for example, may be an IRS, or a component (for example, a chip or a chip system) disposed in the IRS.

It should be understood that the communication apparatus 700 may correspond to the IRS in the method 600 according to embodiments of this application. The communication apparatus 700 may include units configured to perform the method performed by the IRS in the method 600 in FIG. 6. In addition, the units in the communication apparatus 700 and the foregoing other operations and/or functions are respectively for implementing corresponding procedures of the method 600 in FIG. 6.

When the communication apparatus 700 is configured to perform the method 600 in FIG. 6, the processing unit 720 may be configured to perform step S602 in the method 600, and the transceiver unit 710 may be configured to perform S601 and S606 in the method 600. It should be understood that a specific process in which the units perform the foregoing corresponding steps is described in detail in the foregoing method embodiments, and for brevity, details are not described herein again.

It should be further understood that when the communication apparatus 700 is an IRS, the transceiver unit 710 in the communication apparatus 700 may be implemented by a transceiver, for example, may correspond to the transceiver 920 in the network device 900 shown in FIG. 9, and the processing unit 720 in the communication apparatus 700 may be implemented by at least one processor, for example, may correspond to the processor 910 in the network device 900 shown in FIG. 9.

It should be further understood that when the communication apparatus 700 is a chip or a chip system disposed in the network device, the transceiver unit 710 in the communication apparatus 700 may be implemented by an input/output interface, and the processing unit 720 in the communication apparatus 700 may be implemented by a processor, a microprocessor, an integrated circuit, or the like integrated in the chip or the chip system.

FIG. 8 is a diagram of a structure of a terminal device 800 according to an embodiment of this application. The terminal device 800 may be used in the system shown in FIG. 1, to perform functions of the terminal device in the foregoing method embodiments. As shown in the figure, the terminal device 800 includes a processor 810 and a transceiver 820. Optionally, the terminal device 800 further includes a memory 830. The processor 810, the transceiver 820, and the memory 830 may communicate with each other through an internal connection path, and transfer a control signal and/or a data signal. The memory 830 is configured to store a computer program. The processor 810 is configured to: invoke the computer program from the memory 830 and run the computer program, to control the transceiver 820 to receive/send a signal. Optionally, the terminal device 800 may further include an antenna 840, configured to send, by using a radio signal, uplink data or uplink control signaling output by the transceiver 820.

The processor 810 and the memory 830 may be integrated into one processing apparatus. The processor 810 is configured to execute program code stored in the memory 830 to implement the foregoing functions. During specific implementation, the memory 830 may alternatively be integrated into the processor 810, or may be independent of the processor 810. The processor 810 may correspond to the processing unit 720 in FIG. 7.

The transceiver 820 may correspond to the transceiver unit 710 in FIG. 7, and may also be referred to as a transceiver unit. The transceiver 820 may include a receiver (which is also referred to as a receiver machine or a receiver circuit) and a transmitter (which is also referred to as a transmitter machine or a transmitter circuit). The receiver is configured to receive a signal, and the transmitter is configured to transmit a signal.

It should be understood that the terminal device 800 shown in FIG. 8 can implement processes of the terminal device in the method embodiments shown in FIG. 4 and FIG. 6. Operations and/or functions of the modules in the terminal device 800 are separately intended to implement corresponding procedures in the foregoing method embodiments. For details, refer to the descriptions in the foregoing method embodiments. To avoid repetition, detailed descriptions are properly omitted herein.

The terminal device 800 may further include a power supply 850, configured to supply power to various components or circuits in the terminal device.

In addition, to make functions of the terminal device more perfect, the terminal device 800 may further include one or more of an input unit 860, a display unit 870, an audio circuit 880, a camera 890, a sensor 811, and the like, and the audio circuit may further include a speaker 881, a microphone 882, and the like.

FIG. 9 is a diagram of a structure of a network device according to an embodiment of this application, for example, may be a diagram of a structure of a base station. The base station 900 may be used in the system shown in FIG. 1, and perform functions of the first network device or the second network device in the foregoing method embodiments. As shown in the figure, the base station 900 may include one or more radio units, for example, a remote radio unit (remote radio unit, RRU) 910 and one or more baseband units (BBU) (also referred to as a distributed unit (DU)) 3200. The RRU 910 may be referred to as a transceiver unit or a part of the transceiver unit, and corresponds to the transceiver unit 710 in FIG. 7. Optionally, the transceiver unit 910 may also be referred to as a transceiver machine, a transceiver circuit, a transceiver, or the like, and may include at least one antenna 911 and a radio unit 912. Optionally, the transceiver unit 910 may include a receiving unit and a sending unit. The receiving unit may correspond to a receiver (or referred to as a receiver machine or a receiver circuit), and the sending unit may correspond to a transmitter (or referred to as a transmitter machine or a transmitter circuit). The RRU 910 is mainly configured to: receive and send a radio frequency signal, and perform conversion between a radio frequency signal and a baseband signal, for example, configured to send a reference signal to a terminal device, and receive a first channel vector and a fourth channel vector. For details, refer to the descriptions in the foregoing method embodiments. The details are not described herein again.

The BBU 920 is mainly configured to perform baseband processing, control a base station, and the like. The RRU 910 and the BBU 920 may be physically disposed together, or may be physically disposed separately, that is, a distributed base station.

The BBU 920 is a control center of the base station, or may be referred to as a processing unit. The BBU 920 may correspond to the processing unit 720 in FIG. 7, and may be configured to implement a baseband processing function, for example, channel encoding, multiplexing, modulation, or spreading. For example, the BBU (processing unit) may be configured to control the base station to perform an operation procedure of the first network device in the foregoing method embodiments, for example, generate a first reference signal. For another example, the BBU (processing unit) may be configured to control the base station to perform an operation procedure of the second network device in the foregoing method embodiments. For details, refer to the descriptions in the foregoing method embodiments. The details are not described herein again.

In an example, the BBU 920 may include one or more boards. A plurality of boards may all support a radio access network of a single access standard (for example, an LTE network), or may respectively support radio access networks of different access standards (for example, an LTE network, 5G, or other networks). The BBU 920 further includes a memory 921 and a processor 922. The memory 921 is configured to store necessary instructions and data. The processor 922 is configured to control the base station to perform a necessary action, for example, configured to control the base station to perform an operation procedure related to the network device in the foregoing method embodiment. The memory 921 and the processor 922 may serve one or more boards. In other words, a memory and a processor may be disposed on each board. Alternatively, a plurality of boards may share a same memory and a same processor. In addition, a necessary circuit may further be disposed on each board.

It should be understood that the base station 900 shown in FIG. 9 can implement processes of the first network device in the method embodiments shown in FIG. 4 and FIG. 6. Operations and/or functions of the modules in the base station 900 are respectively intended to implement corresponding procedures in the foregoing method embodiments. For details, refer to the descriptions in the foregoing method embodiments. To avoid repetition, detailed descriptions are properly omitted herein.

It should be understood that the base station 900 shown in FIG. 9 can implement processes of the second network device in the method embodiments shown in FIG. 4. Operations and/or functions of the modules in the base station 900 are respectively intended to implement corresponding procedures in the foregoing method embodiments. For details, refer to the descriptions in the foregoing method embodiments. To avoid repetition, detailed descriptions are properly omitted herein.

The BBU 920 may be configured to perform the actions that are implemented by the first network device or the second network device and that are described in the foregoing method embodiments, and the RRU 910 may be configured to perform the actions that are of sending to the terminal device by the first network device or receiving from the terminal device by the first network device and that are described in the foregoing method embodiments, or the actions that are of receiving from the first network device by the second network device or sending to the terminal device by the second network device and that are described in the foregoing method embodiments. For details, refer to the descriptions in the foregoing method embodiments. The details are not described herein again.

It should be understood that the base station 900 shown in FIG. 9 is merely a possible form of the network device, but should not constitute any limitation on this application. The method provided in this application is applicable to a network device in another form. For example, the network device includes an AAU, and may further include a CU and/or a DU, or include a BBU and an adaptive radio unit (adaptive radio unit, ARU), or a BBU; or may be a customer premises equipment (customer premises equipment, CPE), or may be in another form. A specific form of the network device is not limited in this application.

The CU and/or the DU may be configured to perform the actions that are implemented by the network device and that are described in the foregoing method embodiments, and the AAU may be configured to perform the actions that are of sending to the first terminal device by the network device or receiving from the first terminal device by the network device and that are described in the foregoing method embodiments. For details, refer to the descriptions in the foregoing method embodiments. The details are not described herein again.

FIG. 10 is a block diagram of an IRS 1000 according to an embodiment of this application. The IRS 1000 may be used in the system shown in FIG. 2, and perform functions of the IRS in the foregoing method embodiments. As shown in FIG. 10, the IRS 1000 includes a processor 1100 and a transceiver 1200, and the processor 1100 and the transceiver 1200 are connected. Optionally, the IRS 1000 further includes a memory 1300, and the memory 1300 and the processor 1100 are connected. The processor 1100, the memory 1300, and the transceiver 1200 may communicate with each other through an internal connection path.

The processor 1100 may be configured to perform an action that is internally implemented by the IRS and that is described in the foregoing method embodiments. The transceiver 1200 may be configured to perform an action of sending to the terminal device by the IRS or receiving from the first network device by the IRS described in the foregoing method embodiments. For details, refer to the descriptions in the foregoing method embodiment. The details are not described herein again.

It should be understood that the IRS 1000 shown in FIG. 10 can implement processes of the IRS in the method embodiment shown in FIG. 10. Operations and/or functions of the modules in the IRS 1000 are respectively intended to implement corresponding procedures in the foregoing method embodiments. For details, refer to the descriptions in the foregoing method embodiments. To avoid repetition, detailed descriptions are properly omitted herein.

An embodiment of this application further provides a processing apparatus, including a processor and an interface. The processor is configured to perform the method in any one of the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip. In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the method provided in embodiments of this application, this application further provides a computer program product. The computer program product includes computer program code. When the computer program code is run on a computer, the computer is enabled to perform the methods respectively performed by the terminal device, the first network device, and the second network device in the embodiments shown in FIG. 4 and FIG. 6.

According to the method provided in embodiments of this application, this application further provides a computer-readable medium. The computer-readable medium stores program code. When the program code is run on a computer, the computer is enabled to perform the methods respectively performed by the terminal device, the first network device, and the second network device in the embodiments shown in FIG. 4 and FIG. 6.

According to the method provided in embodiments of this application, this application further provides a system. The system includes the one or more terminal devices, the one or more first network devices, and the one or more second network devices.

The first network device, the second network device, and the terminal device in the foregoing apparatus embodiments completely correspond to the first network device, the second network device, and the terminal device in the method embodiments, and corresponding modules or units perform corresponding steps. For example, a communication unit (transceiver) performs the steps of receiving or sending in the method embodiments, and a processing unit (processor) may perform a step other than the sending and receiving steps. For a function of a specific unit, refer to a corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be understood that in this embodiment of this application, the term "indicate" may include a direct indication and an indirect indication. For example, when a piece of indication information is described as indicating information 1, the indication information may directly indicate 1 or indirectly indicate 1, but it does not necessarily indicate that the indication information carries 1.

Information indicated by indication information is referred to as to-be-indicated information. In a specific implementation process, there are a plurality of manners of indicating the to-be-indicated information, for example, but not limited to, the following manners: The to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating the same information.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of the to-be-indicated information.

In addition, the to-be-indicated information may have another equivalent form. For example, a row vector may be represented as a column vector, a matrix may be represented by using a transposed matrix of the matrix, or a matrix may be represented in a form of a vector or an array. The vector or array may be formed by connecting row vectors or column vectors of the matrix, and a Kronecker product of the two vectors may also be represented in a form such as a product of a vector and a transposed vector of another vector. It should be understood that the technical solutions provided in embodiments of this application cover various forms. For example, some or all features in embodiments of this application should be understood as covering various representation forms of the features.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit-end device by sending configuration information to a receive-end device. The configuration information may include, for example without limitation to, one or a combination of at least two of radio resource control signaling, such as RRC signaling, MAC layer signaling such as MAC-CE signaling, and physical layer signaling such as downlink control information (downlink control information, DCI).

It may be understood that, in embodiments shown below, "first", "second", "third", "fourth", and various numerical numbers are merely for distinguishing for ease of description, and are not for limiting the scope of embodiments of this application. For example, the terms are used to differentiate between different indication information and different beams.

It should be further understood that in the foregoing embodiments, "pre-configuration" may be indicated in advance by using signaling, or may be determined according to a preset rule. A specific implementation thereof is not limited in this application. Corresponding to "pre-configuration", "actual reporting" may refer to information that is actually reported by the terminal device to the network device based on channel measurement.

"Predefinition" may be implemented by prestoring corresponding code or a corresponding table in a device (for example, including a terminal device and a network device), or may be implemented in another manner that may be used to indicate related information. A specific implementation thereof is not limited in this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

It should be further understood that, in embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one of a, b, and c may indicate a, b, c, a and b, a and c, b and c, or a, b, and c. Each of a, b, and c may be singular or plural.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

In the foregoing embodiments, all or some functions of the functional units may be implemented by using software, hardware, firmware, or any combination thereof. When software is used to implement the functions, all or some functions may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state disk, SSD)), or the like.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, comprising:
   sending, by a first network device, first information to a second network device, wherein the first information is used by the second network device to determine, at K first time resource locations, K first beam sets, the first beam set comprises at least one first beam, the first information comprises information about the K first time resource locations and information about the K first beam sets, the K first time resource locations are in one-to-one correspondence with the K first beam sets, and K is an integer greater than or equal to 1.

2. The method according to claim 1, wherein the information about the K first beam sets comprises K first matrices, the first matrix comprises $M \times N$ elements, M represents a quantity of radiating elements of the second network device in a vertical dimension, N represents a quantity of radiating elements of the second network device in a horizontal dimension, and M and N are integers greater than or equal to 1; and an $a^{th}$ element in the $M \times N$ elements is a weight of an $a^{th}$ radiating element in $M \times N$ radiating elements, weights of $K \times (M \times N)$ radiating elements are used to generate the K first beam sets, and a is an integer greater than or equal to 1.

3. The method according to claim 2, wherein the first matrix is determined based on one or more of the following:

values of the M × N elements of the first matrix;

a first cyclic shift, wherein the first cyclic shift is a cyclic shift of the first matrix relative to a base matrix, the base matrix comprises M × N elements, M represents the quantity of radiating elements of the second network device in the vertical dimension, N represents the quantity of radiating elements of the second network device in the horizontal dimension, and M and N are integers greater than or equal to 1; and

an index corresponding to a first codeword in a first codebook, wherein the first codebook is a matrix set of the first matrix, the first codebook comprises a plurality of first codewords, each codeword corresponds to one index, and the first codeword indicates the first matrix.

4. The method according to claim 3, wherein the method further comprises:
sending, by the first network device, second information to the second network device, wherein the second information comprises the base matrix.

5. The method according to claim 4, wherein the base matrix is determined based on one or both of the following:

values of the M × N elements of the base matrix; and

an index corresponding to a second codeword in a second codebook, wherein the second codebook is a matrix set of the base matrix, the second codebook comprises a plurality of second codewords, each codeword corresponds to one index, and the second codeword indicates the base matrix.

6. The method according to any one of claims 1 to 5, wherein the method further comprises:

receiving, by the first network device at the K first time resource locations, K uplink reference signals sent by a terminal device, wherein the K uplink reference signals are signals forwarded by the second network device to the first network device by using the K first beam sets, and the K uplink reference signals are in one-to-one correspondence with the K first beam sets; and

determining, by the first network device, third information based on the K uplink reference signals, wherein the third information indicates a second beam set, and the second beam set is used by the second network device to forward, to the first network device, uplink data sent by the terminal device, or the second beam set is used by the second network device to forward, to the terminal device, downlink data sent by the first network device.

7. The method according to any one of claims 1 to 5, wherein the method further comprises:

sending, by the first network device at the K time resource locations, K downlink reference signals to a terminal device, wherein the K downlink reference signals are signals forwarded by the second network device to the terminal device by using the K first beam sets, the K downlink reference signals are in one-to-one correspondence with the K first beam sets, and the K downlink reference signals are used by the terminal device to determine third information; and

receiving, by the first network device, the third information, wherein the third information indicates a second beam set, and the second beam set is used by the second network device to forward, to the first network device, uplink data sent by the terminal device, or the second beam set is used by the second network device to forward, to the terminal device, downlink data sent by the first network device.

8. The method according to any one of claims 1 to 7, wherein the information is carried in radio resource control signaling or media access control control element signaling.

9. An information transmission method, comprising:

receiving, by a second network device, first information sent by a first network device, wherein the first information is used by the second network device to determine, at K first time resource locations, K first beam sets, the first beam set comprises at least one first beam, the first information comprises information about the K first time resource locations and information about the K first beam sets, the K first time resource locations are in one-to-one correspondence with the K first beam sets, and K is an integer greater than or equal to 1; and

determining, by the second network device at the K first time resource locations, the K first beam sets based on the first information.

10. The method according to claim 9, wherein the information about the K first beam sets comprises K first matrices, the first matrix comprises M × N elements, M represents a quantity of radiating elements of the second network device in a vertical dimension, N represents a quantity of radiating elements of the second network device in a horizontal dimension, and M and N are integers greater than or equal to 1; and an $a^{th}$ element in the M × N elements is a weight of an $a^{th}$ radiating element in M × N radiating elements, weights of K×(M × N) radiating elements are used to generate the K first beam sets, and a is an integer greater than or equal to 1.

11. The method according to claim 10, wherein the first matrix is determined based on one or more of the following:

values of the M × N elements of the first matrix;
a first cyclic shift, wherein the first cyclic shift is a cyclic shift of the first matrix relative to a base matrix, the base matrix comprises M × N elements, M represents the quantity of radiating elements of the second network device in the vertical dimension, N represents the quantity of radiating elements of the second network device in the horizontal dimension, and M and N are integers greater than or equal to 1; and
an index corresponding to a first codeword in a first codebook, wherein the first codebook is a matrix set of the first matrix, the first codebook comprises a plurality of first codewords, each codeword corresponds to one index, and the first codeword indicates the first matrix.

12. The method according to claim 11, wherein the method further comprises:
receiving, by the second network device, second information sent by the first network device, wherein the second information comprises the base matrix.

13. The method according to claim 12, wherein the base matrix is determined based on one or both of the following:

values of the M × N elements of the base matrix; and
an index corresponding to a second codeword in a second codebook, wherein the second codebook is a matrix set of the base matrix, the second codebook comprises a plurality of second codewords, each codeword corresponds to one index, and the second codeword indicates the base matrix.

14. The method according to any one of claims 9 to 13, wherein the method further comprises:
forwarding, by the second network device, K uplink reference signals to the first network device by using the K first beam sets, wherein the K uplink reference signals are signals sent by a terminal device to the first network device at the K first time resource locations, the K uplink reference signals are in one-to-one correspondence with the K first beam sets, and the K uplink reference signals are used by the first network device to determine third information, wherein the third information indicates a second beam set, and the second beam set is used by the second network device to forward, to the first network device, uplink data sent by the terminal device, or the second beam set is used by the second network device to forward, to the terminal device, downlink data sent by the first network device.

15. The method according to any one of claims 9 to 13, wherein the method further comprises:
forwarding, by the second network device, K downlink reference signals to a terminal device by using the K first beam sets, wherein the K downlink reference signals are signals sent by the first network device to the terminal device at the K time resource locations, the K downlink reference signals are in one-to-one correspondence with the K first beam sets, and the K downlink reference signals are used by the terminal device to determine third information, wherein the third information indicates a second beam set, and the second beam set is used by the second network device to forward, to the first network device, uplink data sent by the terminal device, or the second beam set is used by the second network device to forward, to the terminal device, downlink data sent by the first network device.

16. The method according to any one of claims 9 to 15, wherein the information is carried in radio resource control signaling or media access control control element signaling.

17. A communication apparatus, wherein the apparatus comprises a unit configured to perform each step in the method according to any one of claims 1 to 16.

18. A communication apparatus, wherein the apparatus comprises a processor, the processor is coupled to a memory, and the memory stores instructions; and when the instructions are run by the processor, the processor is enabled to perform the method according to any one of claims 1 to 16.

19. A communication apparatus, wherein the apparatus comprises a logic circuit, and the logic circuit is configured to be coupled to an input/output interface, and perform data transmission through the input/output interface, to perform the method according to any one of claims 1 to 16.

20. A computer-readable storage medium, wherein the computer-readable storage medium is configured to store a computer program, and when the computer program is run on a computer, the computer is enabled to perform the method according to any one of claims 1 to 16.

21. A computer program product, wherein the computer program product comprises computer program code, and when the computer program code is run, the method according to any one of claims 1 to 16 is implemented.

100

FIG. 1

200

FIG. 2

300

330  320  310

350

340

Controller

FIG. 3

Method 400

| First network device | Second network device | Terminal device |
|---|---|---|

S401: First information →

S405: Second information →

S402: Determine, at K first time resource locations, K first beam sets based on the first information

S403: Send, at the K first time resource locations, K uplink reference signals to the first network device

S404: Determine third information based on the K uplink reference signals

FIG. 4

$(x_1, y_1) = (0, 0)$

| $P_{00}$ | $P_{01}$ | $P_{02}$ |
|---|---|---|
| $P_{10}$ | $P_{11}$ | $P_{12}$ |
| $P_{20}$ | $P_{21}$ | $P_{22}$ |

$(x_2, y_2) = (1, 2)$

| $P_{21}$ | $P_{22}$ | $P_{20}$ |
|---|---|---|
| $P_{01}$ | $P_{02}$ | $P_{00}$ |
| $P_{11}$ | $P_{12}$ | $P_{10}$ |

$(x_3, y_3) = (2, 1)$

| $P_{12}$ | $P_{10}$ | $P_{11}$ |
|---|---|---|
| $P_{22}$ | $P_{20}$ | $P_{21}$ |
| $P_{02}$ | $P_{00}$ | $P_{01}$ |

$\mathbf{P}[00] = \mathbf{J}_0^T \mathbf{P} \mathbf{J}_0$  $\mathbf{P}[12] = \mathbf{J}_1^T \mathbf{P} \mathbf{J}_2$  $\mathbf{P}[21] = \mathbf{J}_2^T \mathbf{P} \mathbf{J}_1$

Base matrix  Measurement beam
weight matrix

FIG. 5

Method 600

| First network device | Second network device | Terminal device |
|---|---|---|

S601: First information

S606: Second information

S602: Determine, at K first time resource locations, K first beam sets based on the first information

S603: Send, at the K time resource locations, K downlink reference signals to the terminal device

S604: Determine third information based on the K downlink reference signals

S605: Third information

FIG. 6

Communication
apparatus 700

Transceiver unit 710

Processing unit 720

FIG. 7

800

840

820  Transceiver

850  Power
supply

810

880  Audio
circuit

Speaker 881

830  Memory

Processor

Microphone 882

890  Camera

Sensor  811

860  Input unit

Display unit  870

FIG. 8

FIG. 9

FIG. 10

## INTERNATIONAL SEARCH REPORT

International application No.

**PCT/CN2023/103327**

### A. CLASSIFICATION OF SUBJECT MATTER

H04B7/0413(2017.01)i

According to International Patent Classification (IPC) or to both national classification and IPC

### B. FIELDS SEARCHED

Minimum documentation searched (classification system followed by classification symbols)

IPC:H04B,H04W,H04L

Documentation searched other than minimum documentation to the extent that such documents are included in the fields searched

Electronic data base consulted during the international search (name of data base and, where practicable, search terms used)

3GPP, WPABS, VEN, DWPI, CNTXTC, WPABSC: IRS, reflect+ 3w surface, 波束成型, 波束成形, csi-rs, pmi

### C. DOCUMENTS CONSIDERED TO BE RELEVANT

| Category* | Citation of document, with indication, where appropriate, of the relevant passages | Relevant to claim No. |
|---|---|---|
| A | US 2020304178 A1 (QUALCOMM INC.) 24 September 2020 (2020-09-24) description, paragraphs 59-209, and figures 3-15 | 1-21 |
| A | CN 112368948 A (NEC CORPORATION) 12 February 2021 (2021-02-12) entire document | 1-21 |
| A | WO 2015103612 A1 (INTEL IP CORPORATION) 09 July 2015 (2015-07-09) entire document | 1-21 |
| A | CN 110999107 A (FRAUNHOFER-GESELLSCHAFT ZUR FÖRDERUNG DER ANGEWANDTEN FORSCHUNG E. V.) 10 April 2020 (2020-04-10) entire document | 1-21 |
| A | CN 108271265 A (HUAWEI TECHNOLOGIES CO., LTD.) 10 July 2018 (2018-07-10) entire document | 1-21 |
| A | WO 2016119208 A1 (QUALCOMM INC.) 04 August 2016 (2016-08-04) entire document | 1-21 |

☐ Further documents are listed in the continuation of Box C.  ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **13 September 2023** | **20 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/103327**

| Patent document cited in search report | | | Publication date (day/month/year) | Patent family member(s) | | | Publication date (day/month/year) |
|---|---|---|---|---|---|---|---|
| US | 2020304178 | A1 | 24 September 2020 | US | 11177862 | B2 | 16 November 2021 |
| | | | | WO | 2017193331 | A1 | 16 November 2017 |
| | | | | WO | 2017193934 | A1 | 16 November 2017 |
| | | | | BR | 112018073109 | A2 | 21 May 2019 |
| | | | | AU | 2017262264 | A1 | 25 October 2018 |
| | | | | AU | 2017262264 | B2 | 04 November 2021 |
| | | | | EP | 3456117 | A1 | 20 March 2019 |
| | | | | EP | 3456117 | A4 | 04 March 2020 |
| | | | | EP | 3456117 | B1 | 09 February 2022 |
| | | | | CA | 3019856 | A1 | 16 November 2017 |
| | | | | JP | 2019519973 | A | 11 July 2019 |
| | | | | JP | 6979970 | B2 | 15 December 2021 |
| CN | 112368948 | A | 12 February 2021 | None | | | |
| WO | 2015103612 | A1 | 09 July 2015 | KR | 20160083083 | A | 11 July 2016 |
| | | | | KR | 101777533 | B1 | 11 September 2017 |
| | | | | EP | 3092724 | A1 | 16 November 2016 |
| | | | | EP | 3092724 | A4 | 06 September 2017 |
| | | | | US | 2015195020 | A1 | 09 July 2015 |
| | | | | US | 9787376 | B2 | 10 October 2017 |
| | | | | JP | 2017507523 | A | 16 March 2017 |
| | | | | JP | 6325113 | B2 | 16 May 2018 |
| | | | | TW | 201532402 | A | 16 August 2015 |
| | | | | TWI | 551078 | B | 21 September 2016 |
| CN | 110999107 | A | 10 April 2020 | US | 2020119785 | A1 | 16 April 2020 |
| | | | | US | 11108444 | B2 | 31 August 2021 |
| | | | | EP | 3639383 | A1 | 22 April 2020 |
| | | | | WO | 2018228707 | A1 | 20 December 2018 |
| CN | 108271265 | A | 10 July 2018 | EP | 3557797 | A1 | 23 October 2019 |
| | | | | EP | 3557797 | A4 | 13 November 2019 |
| | | | | WO | 2018127044 | A1 | 12 July 2018 |
| | | | | US | 2019326974 | A1 | 24 October 2019 |
| | | | | US | 10855357 | B2 | 01 December 2020 |
| | | | | BR | 112019013770 | A2 | 21 January 2020 |
| WO | 2016119208 | A1 | 04 August 2016 | None | | | |

Form PCT/ISA/210 (patent family annex) (July 2022)

**EP 4 542 873 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210918209